# EUROPEAN PATENT SPECIFICATION

(11) **EP 4 445 216 B1**
(45) Date of publication and mention of the grant of the patent: **02.09.2026**
(21) Application number: 22834857.9
(22) Date of filing: 06.12.2022
(51) Int. Cl.: G03B 21/20

(54) **IRRADIANCE MONITORING IN PROJECTOR SYSTEMS**
BESTRAHLUNGSÜBERWACHUNG IN PROJEKTORSYSTEMEN
SURVEILLANCE D'ÉCLAIREMENT ÉNERGÉTIQUE DANS DES SYSTÈMES DE PROJECTEUR

(30) Priority: 06.12.2021 US 202163265019 P
(43) Date of publication of application: 16.10.2024
(73) Proprietor: Barco N.V., 8500 Kortrijk (BE)
(72) Inventor: GYSELINCK, Stefan, 8500 Kortrijk (BE); BALLESTAD, Anders, Vancouver, British Columbia (CA)
(74) Representative: Sader, Marc
(86) International application number: PCT/EP2022/084581
(87) International publication number: WO 2023/104787

(56) References cited:
- WO-A1-2010/147061
- US-A1- 2008 273 123
- US-A1- 2009 128 451
- US-A1- 2011 157 245
- US-A1- 2012 038 892
- US-A1- 2017 208 301
- US-A1- 2021 003 910
- US-B2- 11 079 666

## Description

### Reference to Related Applications

This application claims priority from United States application No. 63/265019 filed 6 December 2021.

### Field

The present technology relates to image projector systems.

### Background

Movies and other content may be enjoyed by projecting images onto a screen for viewing. One factor that strongly affects the realism and impact of projected images is dynamic range (the difference between the highest and lowest light intensity in an image). There is a demand for high resolution, high dynamic range (HDR), projectors capable of projecting images that include high intensity highlights. Such projectors can provide significantly enhanced viewing experiences.

One technology that may be used to realize HDR projectors is light steering. Light steering involves concentrating light that would otherwise be directed to darker areas of an image to provide image highlights. The image highlights may have light intensities that are many times higher than a full frame uniform intensity achievable by the same projector. As such, light steering technology may help to achieve both high dynamic range and high maximum intensity in highlights for a vivid viewing experience.

Especially when light steering is involved, an image forming device may be illuminated non-uniformly. The nature of this intentional non-uniformity is such that substantially the whole illumination power of the HDR projector may be concentrated on one or more regions that are significantly smaller than the total area that is normally illuminated.

One problem with projectors capable of very high light intensity output, whether achieved using light steering or other technologies is the danger that a person's vision could be damaged if the person looks toward the output of the projector. To avoid this problem, there are standards that specify limits on the maximum radiant exposure that the projector can deliver at a fixed distance from an output of the projector. Examples of such a standard is IEC 60825-1:2014 published by the International Electrotechnical Commission and 21 CFR 1040.10 and 1040.11.

Algorithms for controlling a HDR projector may be designed to avoid output of light having irradiance that exceeds safe levels. However, such algorithms may not always be reliable, especially where light steering is involved.

As the demand for more vivid and compelling viewing experiences increases there is an increased demand for projectors that are capable of exceeding safe radiant exposures. The inventors have determined that there is a need for projector systems that include output monitoring to ensure safety and compliance with applicable regulations.

US 2021/003910 A1 discloses a conventional light source without the ability to calibrate the system.

### Summary

This invention has a number of aspects including, without limitation:
- projector systems that include light irradiance monitoring;
- methods and apparatus for monitoring irradiance in light modulated by a projector;
- methods and apparatus for protecting persons who intrude into a region containing a beam of light projected by a projector;
- methods and apparatus for controlling irradiance of light output by a light projector.

Independent claim 1 provides a light projection system (10) comprising: a light source (12) operative to emit a light field; output optics (16) arranged to project the light of the light field; and an irradiance monitor (20). The irradiance monitor comprises: a light sampling element (21) arranged to redirect a fraction of the light from the light field onto a first portion (22-1) of a light sensor (22); a calibration light source (24) comprising one or more calibration light emitters (25) operative to emit calibration light (24A), the calibration light source (24) arranged to direct the calibration light (24A) to illuminate a second portion (22-2) of the light sensor (22); and a processor (26) connected to receive image data (27) from the light sensor (22) and to process the image data (27) to determine whether light incident on the first portion of the light sensor (22) has an irradiance in excess of an irradiance threshold based on a response of the light sensor (22) to the calibration light (24A) and the fraction of the light from the light field.

The light projection system (10) may comprise a modulation stage (14) operative to modulate the light field from the light source (12) to yield a modulated light field (15) wherein the light sampling element (21) samples the modulated light field (15).

The modulation stage (14) may comprise a light steering unit (14A) operative to concentrate light from the light source (12) into regions having irradiance greater than irradiance of light incident on the light steering unit (14A) from the light source (12).

The light source (12) may comprise a plurality of light emitters (13) each operative to emit light in a corresponding one of a first plurality of narrow wavelength bands.

The first plurality of narrow wavelength bands may be made up of a first red (R) band, a first green (G) band and a first blue (B) band.

The calibration light source (24) may comprise a plurality of light emitters (25) which each emit light in a corresponding one of a second plurality of wavelength bands.

The second plurality of wavelength bands may be made up of a second red (R) band, a second green (G) band and a second blue (B) band.

The calibration light source (24) may comprise one or more broadband light emitters.

The broadband light emitters may comprise white light emitters.

The one or more calibration light emitters (25) may comprise one or more light emitting diodes (LEDs).

The light sensor (22) may comprise an imaging light sensor (22) operative to output the image data (27).

The light sensor (22) may comprise an RGB light sensor (22).

The projected light may include frames projected at a frame rate and the light sensor (22) may measure the light from the light field at a rate that is at least twice the frame rate.

The light sensor (22) may measure the light from the light field at a rate that is at least once every 5 milliseconds.

The light sensor (22) may measure the light from the light field at a rate that is at least once every 3 milliseconds.

The light projection system (10) may b econfigured to apply a colour transform to the image data (27) to yield transformed image data in which cross talk between colour channels of the image data is reduced.

Values in the transformed image data may be indicative of irradiance.

The colour transform may be representable as a 3X3 matrix.

The light sensor (22) may comprise a RGB sensor that is part of a colour camera (23), the colour transform may be performed by the camera (23) and the processor (26) the transformed image data from the camera (23).

The processor (26) may be configured to, in response to determining that the light incident on the first portion (22-1) of the light sensor (22) has an irradiance in excess of the irradiance threshold, shut off or dim the light source (12) and/or operate a shutter to block light from being projected by the output optics (16).

The light projection system (10) may further comprise an intrusion detection system operative to detect intrusion of persons or objects into a region that includes a beam of light projected by projection optics (16) wherein the processor (26) is configured to, in response to determining that the light incident on the first portion (22-1) of the light sensor (22) has an irradiance in excess of the irradiance threshold and receiving an input from the intrusion detection system indicating an intrusion, shut off or dim the light source (12) and/or operate a shutter to block light from being projected by the output optics (16).

The intrusion detection system may comprise a range finder operative to determine whether any detected persons or objects are closer than a threshold distance to the projection optics (16). The processor (26) may be configured to, in response to determining that the light incident on the first portion (22-1) of the light sensor (22) has an irradiance in excess of the irradiance threshold and receiving an input from the intrusion detection system indicating an intrusion of a person or object that is closer to the projection optics (16) than the threshold distance, shut off or dim the light source (12) and/or operate a shutter to block light from being projected by the projection optics (16).

The light source (12) may comprise a plurality of laser light emitters (13).

The laser light emitters (13) may each emit light having bandwidth of 15nm or less.

The processor (26) being configured to process the image data (27) to determine whether light incident on the first portion of the light sensor (22) has an irradiance in excess of an irradiance threshold may comprise the processor being configured to evaluate per pixel: $\frac{R + G + B}{Rref + Gref + Bref}$ where R, G and B are R, G, and B output values from the light sensor (22) monitoring the light field (15) and *R_{ref}, G_{ref}* and *B_{ref}* are output values from the imaging light sensor (22) monitoring red, green and blue components of the calibration light (24A).

The light sampling element (21) may comprise a beam splitter.

The light sampling element (21) may redicrect less than 5% of the light from the light field onto the light sensor.

The light sampling element may redirect less than 1% of the light from the light field onto the light sensor.

The calibration light source (24) may illuminate the light sensor (22) uniformly.

A refresh rate of the light sensor (22) may be significantly higher than a refresh rate of the modulation stage (14).

Arefresh of the light sensor (22) may be coordinated with a refresh of the modulation stage (14) such that the light sensor (22) captures irradiance of the modulated light field (15) shortly after the modulation stage (14) is refreshed.

The light sensor (22) may comprise one or more optics for spectrally separating the light from the light field.

The output optics (16) may comprise a zoom lens that is adjustable to provide different throw ratios. The irradiance monitor (20) may be configured to receive an input identifying a zoom setting of the zoom lens.

The input identifying the zoom setting may be provided from plural redundant zoom position sensors.

In response to changes in the zoom setting, the irradiance monitor (20) may: adjust a trip level of the irradiance monitor (20) to compensate for differences in the zoom setting; if the current zoom setting is larger than a threshold, inhibits operation of the light source (12) operative to emit the light field and/or operates the light source (12) at a lower power setting and/or introduces an optical attenuator into a light path of the light projection system (10) and/or disables light steering and/or controls light steering to at least partially dump light from the light field and/or issues a warning signal; and/or changes the zoom setting of the output optics (16).

The calibration light source (24) may comprise redundant light emitters.

The light emitters (25) of the calibration light source (24) may be used in rotation.

The light emitters (25) of the calibration light source (24) may be housed in a temperature controlled environment.

The light emitters (25) of the calibration light source (24) may b emaintained at a temperature slightly greater than a maximum expected ambient temperature.

The calibration light source (24) may comprise one or more reference sets of light emitters that are used sparingly to determine aging compensation for other sets of light emitters of the calibration light source (24).

The aging compensation may comprise adjusting driving currents for the other sets of light emitters of the calibration light source (24) so that light outputs of the other sets of light emitters match light outputs of corresponding ones of the reference sets of light emitters.

Independent claim 15 provides a calibration method comprising: developing a colour transform for a light source (12) and/or a calibration light source (24); and at least partially determining residual crosstalk and/or scaling to absolute irradiance levels.

The calibration method may comprise any of the features, combinations of features and/or sub-combinations of features discussed above.

Another aspect of the invention provides a calibration method for the light projection system described above. The method comprises: developing a colour transform for the light source (12) and/or the calibration light source (24) based at least in part on the image data (27); and at least partially determining residual crosstalk and/or scaling to absolute irradiance levels.

The calibration method may comprise any of the features, combinations of features and/or sub-combinations of features discussed above.

Other aspects of the invention provide apparatus having any new and inventive feature, combination of features, or sub-combination of features as described herein.

Other aspects of the invention provide methods having any new and inventive steps, acts, combination of steps and/or acts or sub-combination of steps and/or acts as described herein.

The following description and the accompanying drawings describe a wide variety of ways to implement the above noted methods and apparatus as well as different ways to implement individual components of such methods and apparatus.

It is emphasized that the invention relates to all combinations of the features, described and illustrated in this document even if these are recited in different claims, shown in different drawings, described in different sections, paragraphs or sentences.

Further aspects and example embodiments are illustrated in the accompanying drawings and/or described in the following description.

### Brief Description of the Drawings

The accompanying drawings illustrate non-limiting example embodiments of the invention.
Fig. 1 is a block diagram showing a projector system according to an example embodiment of the present technology.
Fig 1A is a schematic diagram illustrating a possible layout for optical components for monitoring optical power in a projection system.
Fig. 1B is a set of curves showing response of R, G and B channels of an example sensor as a function of the wavelength of light illuminating the sensor.
Fig. 1C is a schematic view of an imaging sensor showing example areas for monitoring light from a projector and for monitoring calibration light.
Figs. 2A to 2E are collectively a flow chart illustrating a method according to an example implementation of the invention.
Figs. 3A to 3E are collectively a flow chart illustrating a method according to another example implementation of the invention.
Figs. 4A and 4B illustrate an optional intrusion detection system (that may also be used in combination with other projector systems).

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

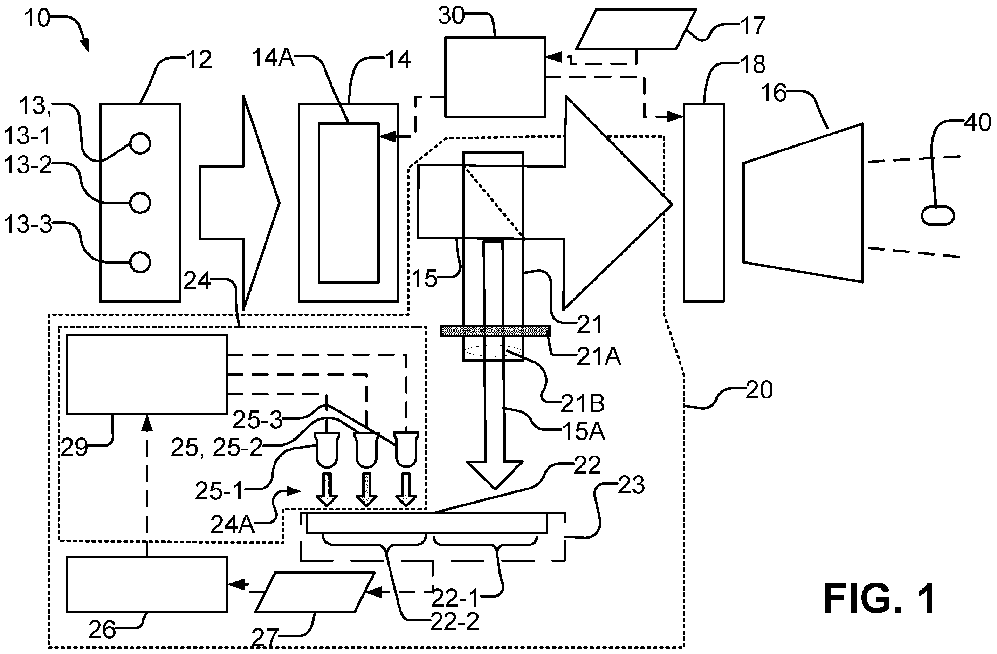

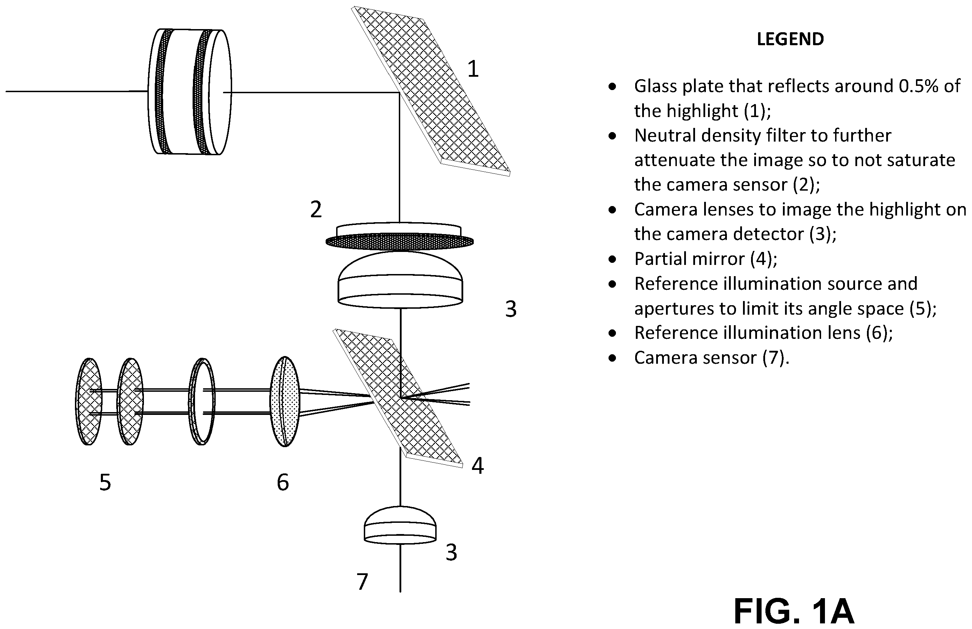

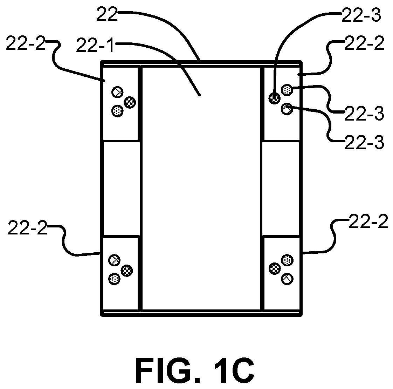

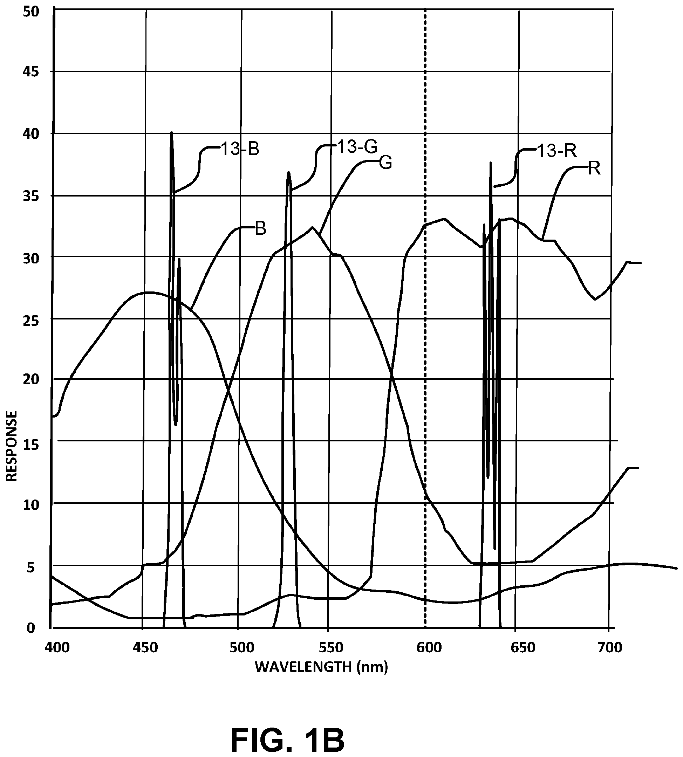

One aspect of the present technology provides a projector system that includes a monitor of output irradiance. Fig. 1 is a block diagram of a projector system 10 according to an example embodiment. Projector system 10 includes a light source 12 that includes one or more light emitters 13. Each light emitter 13 is operable to emit light having a corresponding spectrum. A light emitter 13 may include plural units (e.g., plural laser diodes) that are driven together. Light source 12 may, for example, include light emitters that emit light having wavelengths corresponding to respective primary colours (e.g., red (R), green (G) and blue (B).

In Fig. 1, light emitters 13-1, 13-2 and 13-3 are shown (generally and collectively light emitters 13). Light emitters 13-1, 13-2 and 13-3 may each output light of a different colour. For example, light emitters 13-1, 13-2 and 13-3 may respectively output red, green and blue light (e.g., 13-R, 13-G, 13-B in Fig. 1B). Light emitters 13 may, for example, each comprise a laser light emitter. In some embodiments, light emitters 13 emit light having a narrow bandwidth (e.g., 15 nm or less). In some embodiment, each of light emitters 13 comprises plural light emitting elements (e.g., plural laser diodes). In some embodiments the plural light emitting elements emit light of slightly different wavelength. This wavelength diversity may help to ameliorate laser speckle.

Modulation stage 14 is controlled by controller 30 to modulate light from light source 12 according to image data 17 to yield a modulated light field 15 which is directed by output optics 16 toward a screen or other surface for viewing. In some embodiments, modulation stage 14 includes light steering technology. Fig. 1 shows light steering unit 14A. Light steering involves redirecting incident light so that the incident light is concentrated in areas where a light field should be more intense (highlights) and/or steered away from areas where the light field should be darker (e.g., according to image data 17). Examples of light steering are described in PCT international patent publication Nos.WO2015054797, WO2015184549, WO2016015163, WO2017059537 and WO2018205036. These documents may be consulted for background information.

In some embodiments an amplitude modulator 18 (e.g., a LCD panel, LCOS spatial light modulator, DMD or the like) further spatially modulates modulated light field 15, for example to add high spatial frequency details in a projected image.

Projection system 10 includes a monitor 20 that operates to monitor output irradiance produced by projector system 10 as described herein. In some embodiments, monitor 20 operates as a quasi-independent safety function that continuously monitors an illumination pattern (e.g., modulated light field 15) of projector system 10.

In some applications of the present technology modulation stage 14 is not required or present. In such applications, monitor 20 may monitor a light field produced by light source 12 without additional modulation.

Monitor 20 includes a light sampling element 21 that redirects a small set portion of light 15A from modulated field 15 onto a sensor 22. Light sampling element 21 images modulated light field 15 onto sensor 22. Light sampling element 21 may, for example, comprise a beam splitter. Light sampling element 21 may, for example, redirect less than 5% of the light in modulated light field 15 to sensor 22. In an example embodiment, light sampling element 21 redirects less than 1% (e.g., 0.5% or 0.3%) of the light from modulated light field 15 to sensor 22.

Light sampling element 21 may include an attenuating element 21A such as a neutral density filter to reduce the intensity of the light redirected by sampling element 21 that reaches sensor 22 by a desired factor. Light sampling element 21 may be designed so that the intensity of light from modulated light field 15 that reaches sensor 22 is between the black level and saturation level of sensor 22. In some embodiments the light incident on sensor 22 has an intensity (illuminance) that is a factor of 10⁵ or more less than the intensity of modulated light field 15.

Light sampling element 21 may include one or more lenses 21B to image modulated light field 15 onto sensor 22.

It is an option to integrate monitor 20 with projection optics 16. For example, light sampling element 21 may be integrated into a projection lens.

Monitor 20 also includes a calibration light source 24 operative to direct calibration light 24A onto sensor 22. Preferably calibration light 24A is directed to illuminate areas of sensor 22 that are outside of a region of sensor 22 onto which light from modulated light field 15 is directed. This advantageously allows calibration light 24A and light sampled from modulated light field 15 to be monitored simultaneously by sensor 22. Where the performance of sensor 22 is spatially uniform (e.g., the pixels in different areas of sensor 22 have the same responsiveness) or any spatial variation of the performance of sensor 22 is known then it is not necessary for calibration light 24A to illuminate the same pixels of sensor 22 as light from modulated light field 15.

Figure 1C shows an example arrangement for a sensor 22 in which a region 22-1 is illuminated by light from modulated light field 15 and one or more regions 22-2 located on sensor 22 outside of region 22-1 are illuminated by calibration light 24A. In some embodiments, calibration light 24A includes spots 22-3 of light of different colours (e.g., R, G and B calibration light 24A). Many variations are possible in the sizes and locations of region 22-1 and 22-2 as well as the number of regions 22-2.

It is not necessary for sensor 22 to have extremely high spatial resolution. For example, the resolution of sensor 22 may be selected so that sensor 22 oversamples the finest detail that modulated light field 15 may have. Where modulation stage 14 provides modulation of modulated light field 15 by a light steering unit for which the smallest feature is about 10% of screen height, a sensor 22 of 1 megapixel or more may have adequate spatial resolution. Sensor 22 may have a spatial resolution higher than necessary; however, this comes at the cost of longer time needed or more complex hardware needed to output sensor image data from sensor 22 and to process that sensor image data.

In some embodiments, calibration light source 24 is configured to illuminate sensor 22 uniformly with calibration light 24A or may be configured to illuminate only a specific part of sensor 22 with calibration light 24A.

Calibration light source 24 may, for example, comprise one or more light emitting diodes (LEDs) 25 and a driver circuit 29 that operates the one or more LEDs 25 to provide a desired output of calibration light 24A.

Driver circuit 26 may, for example, drive each of LEDs 25 with a corresponding constant DC electrical current. The magnitude (I) of the DC electrical current may be set so that calibration light 24A illuminates sensor 22 with a desired irradiance.

In the illustrated embodiment, calibration light source 24 is operative to emit light of a plurality of colours. For example, calibration light source 24 may be operative to emit light of the same number of different colours as are included in the light of modulated light field 15 (three in the illustrated example).

In Fig 1, LEDs 25-1, 25-2 and 25-3 are shown. LEDs 25-1, 25-2 and 25-3 may, for example, respectively be operable to emit R, G, and B, light. The wavelengths of light emitted by calibration light source 24 are not required to be the same as the wavelengths of light in modulated light field 15.

In some embodiments, calibration light 24A includes:
- a first wavelengths of light having a wavelength close to that of a first wavelength of light emitted by light source 12;
- a second wavelengths of light having a wavelength close to that of a second wavelength of light emitted by light source 12;
- a third wavelengths of light having a wavelength close to that of a third wavelength of light emitted by light source 12;
The first wavelengths may, for example be in the red part of the spectrum. The second wavelengths may, for example be in the green part of the spectrum. The third wavelengths may. for example be in the blue part of the spectrum.

In some embodiments calibration light emitters 25 comprise broadband light emitters such as, for example, LEDs that emit white light ("white LEDs"). As described in more detail below, broadband light emitters such as white LEDs may be substituted for R, G and B LEDs without overall loss of function. White LEDs may, for example, be phosphor based.

Monitor 20 also includes a processor/controller 26 that operates to process sensor image data 27 output by sensor 22 and to determine whether irradiance of modulated light field 15 exceeds a threshold. Processor 26 may be implemented using any of a wide range of technologies such as field programmable gate arrays (FPGAs) or other configurable hardware, graphics processing units (GPUs), software-controlled data processors, and/or purpose specific logic circuits. Processor 26 may be a stand-alone processor/controller or may be integrated into a controller (e.g., controller 30) that controls one or more other aspects of projector system 10 or controls projector system 10 overall.

Processor 26 is operable to monitor irradiance of modulated light field 15 in real time and to take a suitable action if the irradiance in an area of light field 15 exceeds a threshold. Example actions that processor 26 may trigger include, without limitation:
- modifying or overriding image data 17 that defines images for projection by projector system 10 (e.g., to reduce specified luminance of a portion of an output image);
- defocusing all or part of the light output by the projector;
- controlling light source 12, modulation stage 14 and/or a controllable shutter or light attenuator to prevent light output by projector system 10 from exceeding a threshold;
- cutting power to light emitters of source 12; and/or
- generating a warning.

For certain applications it can be desirable for system 10 to react exceedingly quickly (e.g., within a few milliseconds) in the case that monitor 20 detects irradiation above a safety threshold. Sensor 22 may operate at a frame rate that is high enough to ensure that irradiance exceeding a set threshold can be identified within a desired time. For example, if system 10 should react to irradiance exceeding the set threshold within at most 4 to 5 milliseconds, sensor 22 may be refreshed and the sensor image data from sensor 22 processed as described herein at least once every 4 milliseconds or faster (e.g., once every 2 or 3 milliseconds). This typically means that the refresh rate of sensor 22 will be significantly higher than the refresh rate of modulation stage 14 and/or a spatial light modulator of projection system 10 (which, at example frame rates of 120 Hz or less, may be refreshed at a rate of once every 8 milliseconds or longer). In some embodiments refresh of sensor 22 is coordinated with refresh of modulation stage 14 such that sensor 22 captures irradiance of modulated light field 15 shortly after any active modulation elements in modulation stage 14 have been refreshed.

In some embodiments system 10 is configured to commence taking action (e.g., an action as described above) to reduce the likelihood that projected light will have an irradiance that exceeds the safety threshold in response to monitor 20 detecting irradiance that exceeds a lower threshold (e.g., 90% of the safety threshold). In some embodiments, monitor 20 outputs an irradiance level signal that indicates how close the maximum monitored irradiation of modulated light field 15 is to a tripping point. Other parts of projector system 10 may use the irradiance level signal to make adjustments that tend to limit maximum irradiance of projected light (e.g., by controlling a light steering unit using a less aggressive setting that reduces concentration of light into small highlights).

Sensor 22 is operative to detect light from light sources 12 and calibration light source 24. Sensor 22 may take a variety of forms. For example, sensor 22 may comprise one or more imaging light sensors (i.e. sensors that produce as output a two dimensional (2D) map (image) representing a measured quality of light as a function of position in the 2D image). Imaging sensors may be fixed (e.g., provided by an array of pixel sensors which each measures light in a fixed corresponding point or area of modulated light field 15) or scanning (e.g., provided by one or more sensors and an optical path that includes one or more scanning elements such that the position in modulated light field 15 which corresponds to the light sampled by sensor 22 changes as a function of time). In applications where the projected light is uniform (e.g., flat field) or has a known structure, sensor 22 may be provided by one or more discrete light sensors (such as photodiodes, charge coupled devices (CCDs) or the like).

Sensor 22 may include optics for spectrally separating light (e.g., spectral filtering). Such optics may be arranged for example to deliver R, G, and B, components of the light to different light detectors.

In some embodiments, sensor 22 is provided by light detectors of a camera 23. A wide variety of suitable colour cameras are commercially available. One example is the model GigEPRO GP4136C camera available from from NET GmbH, of Finning, Germany. This camera has a model EV76C560 image sensor available from e2v GmbH, of Gröbenzell, Germany.

Camera 23 may comprise a colour camera. For example, sensor 22 may comprise a RGB imaging sensor. Sensor 22 may be of the same general type as used in general purpose cameras (e.g., sensor 22 may be optimized to provide an RGB output that allows for acceptable color reproduction of general real-world scenery under more or less common illumination circumstances). It is not necessary for sensor 22 to be designed for accuracy, reliability, stability or to output absolute luminance or irradiance levels.

Figure 1B shows example spectral responsiveness as a function of wavelength for R, G and B sensors in a typical colour camera sensor. Curves R, G, and B, are respectively for R, G, B sensors. It can be seen that the R, G, B response curves overlap with one another. A result of this overlap is that light of one wavelength can cause a response in two or more of the R, G, and B sensors. In other words, the overlap between the response curves for the R, G, B sensors can cause crosstalk between output channels of the sensors. For example, when a sensor with the illustrated responsiveness is illuminated with blue light at a wavelength of about 600 nm (as indicated by the vertical dotted line in Figure 1B) not only the red channel responds to the light. There is also a significant response in the green channel and a smaller but still detectable response of the blue channel.

As described herein, monitor 20 may determine a relative response of sensor 22 to light from modulated light field 15 and to light from calibration light source 24. Monitor 20 may use this relative response together with the known irradiance of calibration light source 24 to evaluate the irradiance of light field 15.

In some embodiments, calibration light source 24 provides light of substantially the same wavelengths as light sources 12. In such embodiments the response of sensor 22 to light from calibration light source 24 can be used directly to determine the irradiance of light in modulated light field 15. However, it is not always convenient to construct a calibration light source 24 that emits light that has the same wavelengths as light sources 12.

In some embodiments the light emitted by calibration light source 24 contains light of different wavelengths and/or different linewidths as compared to the light in modulated light field 15. For example, light source 12 may comprise lasers or banks of lasers that emit light having narrow linewidths (e.g., 10 nm or less) while calibration light source 24 comprises LEDs that emit light having linewidths in the range of about 15 to 40 nm. In an example embodiment, light sources 12 comprise lasers that respectively emit R, G, and B, light and calibration light source 24 includes LEDS that respectively emit R, G, and B, light. The LEDs may, for example emit light having linewidths of about 20nm, 30nm, 25nm for R, G, B respectively.

One complication in using an RGB sensor (e.g., a camera imaging sensor) for determining irradiance of light is that there tends to be cross-talk between the R, G, and B channels of the sensor (i.e. illumination of the sensor by light of a particular wavelength may cause non-negligible outputs in two or more of the R, G, and B, channels). The response of a sensor having M output channels to light made up of a set of N discrete wavelengths may be expressed as a NXM matrix. Where M=N the off-diagonal terms each represent cross-talk between a pair of the channels. For a RGB sensor (M=3) and light substantially made up of three wavelengths (N=3) the matrix is a 3X3 matrix.

Monitor 20 may perform a calibration procedure that allows irradiance of modulated light field 15 to be determined based on the output from sensor 22. The calibration procedure may be conceptualized as comprising a first step which separates three components of the illumination and/or calibration light into three categories and a second step which tags each of the categories with a corresponding energy-based weight. The resulting sensor outputs may be interpreted as components of the total optical power levels and summed. This procedure strongly reduces the impact of the mutual balances of the illumination light and the calibration light.

In cases where the light from light source 12 and calibration light source 24 have different spectral content, the residual crosstalk can be substantial and typically depends on the RGB balance of the light. Crosstalk distorts the mapping of the energy-based weights and therefore interferes with the accuracy of irradiance obtained by summing the sensor outputs. Methods as described herein may include steps for reducing crosstalk between the colour channels to reduce or eliminate this distortion.

In some embodiments the calibration procedure has two main steps:
1. Determine a suitable color transform (which may, for example, be expressed as a colour correction matrix) for one light source (light source 12 or calibration light source 24).
2. Determine the residual crosstalk and scaling to absolute irradiance levels for stimuli of light source 12.

The colour transform may serve two functions:
a. calibrate the outputs of sensor 22 to yield irradiance levels for the color channels of sensor 22 (e.g., R, G, and B channels) and
b. reduce crosstalk between the color channels.

It is beneficial to determine the colour transform for either light source 12 or calibration light source 24. This avoids the complexity of working with two different colour transforms.

The irradiance of light projected by projector system 10 at any distance from projection optics 16 will depend on characteristics of projection optics 16. For example, projection optics 16 may be characterized by a throw ratio D/W where D is a distance between projection optics 16 and a screen and W is a width of the projected image on the screen. Changing projection optics 16 (either by replacement or adjustment) to have a higher throw ratio tends to increase the irradiance of light in a projected beam at any distance in front of projection optics 16. Changing projection optics 16 to have a smaller throw ratio has the opposite effect.

In some embodiments monitor 20 is configured to receive input that identifies projection optics 16 installed on projector system 10. Monitor 20 may store identification information for projection optics 16 at the time of calibration. If at a later time monitor 20 detects that current projection optics 16 does not match the stored identification information then monitor 20 may take actions to maintain safe operation of projector system 10. The actions may, by way of non-limiting example, comprise one or more of:
- inhibiting operation of light source 13;
- operating light source 13 at a low power setting;
- introducing an optical attenuator into a light path of projector system 10;
- disabling a light steering unit of modulation stage 14;
- operating a light steering unit of modulation stage 14 to "dump" some or all light from light source 12;
- adjusting a "trip level" of monitor 20 to compensate for differences between the projection optics 16 at the time of calibration and the current projection optics 16;
- determining that the current projection optics 16 will provide lower irradiance than the projection optics 16 that were present at the time of calibration and taking no action;
- issuing a warning signal.

In some embodiments projection optics 16 comprise a zoom lens that is adjustable to provide different throw ratios in a range of throw ratios. In some such embodiments monitor 20 receives an input identifying a zoom setting of the zoom lens. The input may be provided from plural redundant zoom position sensors to enhance reliability. In response to changes in the zoom setting monitor 20 may take actions to maintain safe operation of projector system 10. The actions may, by way of non-limiting example, comprise one or more of:
- adjusting a "trip level" of monitor 20 to compensate for differences in the zoom level (i.e. reprogramming the irradiance threshold based on the zoom level);
- if the current zoom setting is larger (e.g., corresponds to a larger throw ratio) than a threshold, inhibiting operation of light source 13;
- if the current zoom setting is larger than a threshold, operating light source 13 at a low power setting;
- if the current zoom setting is larger than a threshold, introducing an optical attenuator into a light path of projector system 10;
- if the current zoom setting is larger than a threshold, disabling a light steering unit of modulation stage 14;
- if the current zoom setting is larger than a threshold, operating a light steering unit of modulation stage 14 to "dump" some or all light from light source 12;
- if the current zoom setting is larger than a threshold, issuing a warning signal;
- changing the zoom setting of the projection optics 16 (this may involve overriding a user selected zoom setting).
Threshold zoom settings for the above actions are not necessarily the same.

In some embodiments projector system 10 includes a table which relates zoom settings to corresponding trip levels for monitor 20. Processor 26 may use the table to compensate for changes in zoom settings.

Monitoring for changes in projection optics 16 may, for example, be performed by processor 26 executing suitable firmware or software. In some embodiments processor 26 has access to a table that includes characteristics for a number of lenses that may be interchangeably included in projection optics 16. The table may, for example, expressly include compensation factors for adjusting a tripping point of monitor 20 or information (such as throw ratios) based on which processor 26 may calculate compensation factors for adjusting the tripping point of monitor 20 to compensate for different lenses being used in projection optics 16.

Calibration light source 24 may be made more reliable by including redundant calibration light emitters 25. In some embodiments calibration light source 24 includes three or more sets of light emitters 25 that respectively illuminate different parts of sensor 22. Each set of light emitters 25 may include one or more light emitters 25 of each wavelength present in calibration light 24A.

Processor 26 may monitor the light detected in regions (e.g. regions 22-2) of sensor 22 corresponding to each of the light emitters 25 and may coordinate corrective action in the event that any of the calibration light emitters 25 is not working or appears to be producing the wrong amount of light (because it is producing more or less light than the other calibration light emitters of the same wavelength.)

In some embodiments different combinations of sets of light emitters 25 are used in rotation. For example where there are three sets, A, B and C of calibration light emitters 25 these sets may be used in rotation in the combinations A-B, B-C and C-A.

The optical output of LEDs and light emitters of some other types can be temperature dependent. To avoid ambient temperature from affecting the operation of monitor 20, light emitters 25 of calibration light source 24 may be housed in a temperature controlled environment. For example, when monitor 20 is operating an environment of light emitters 25 may be maintained at a temperature slightly greater than a maximum expected ambient temperature. In some embodiments a temperature of sensor 22 is also controlled.

The light output of LEDs and some other types of light emitters may change as the light emitters age. Aging tends to be accelerated with use. In some embodiments calibration light source 24 includes one or more reference sets of light emitters 25 that are used sparingly to determine aging compensation for other sets of light emitters 25 in calibration light source 24. For example, when monitor 20 is powered on, outputs of the reference set(s) of light emitters 25 may be measured and compared to outputs of other sets of light emitters 25. An aging compensation procedure may involve adjusting driving currents for light emitters 25 in the other sets of light emitters 25 so that the light outputs of the other light emitters 25 match that of corresponding one(s) of the reference light emitters 25.

As described herein, the present technology may be implemented in a wide variety of different ways which may use different components and/or be configured for different modes of operation. Failure modes, effects, and diagnostic analysis (FMEDA) may be applied in designing such systems to enhance reliability and safety.

In addition to providing a safety function, monitor 20 may output information regarding measured irradiance of modulated light field 15 that may be applied by other parts of projector system 10 to check their operation (e.g., by comparing a maximum irradiance measured by monitor 20 to a predicted irradiance predicted from control inputs such as light steering settings) and/or to better control their operation (e.g., by using the information from monitor 20 as a feedback signal in a control loop such as a control loop that sets power levels for light emitters 13 of light source 12).

The following sections provides example implementations. These examples include details applicable to the case where:
- light sources 12 comprise R, G, and B lasers that emit R, G, and B, light at first specific wavelengths with narrow bandwidth (e.g., 10 nm),
- calibration light source 24 comprises R-, G-, and B-emitting LEDs that emit R, G, and B, light at second specific wavelengths which are not constrained to be the same as the first specific wavelengths and have larger bandwidth than light source 12; and
- sensor 22 is an imaging sensor of a general purpose RGB camera 23.
Those of skill in the art will understand that the following example implementations may be varied to accommodate other cases where light source 12, calibration light source 24 and/or camera 22 have different properties.

### Example implementation 1

This example implementation begins by developing a colour transform for light source 12 and then proceeds to determine residual crosstalk and scaling to absolute irradiance levels for light source 12. This choice is advantageous based on the characteristics of light from light source 12 and calibration light source 24 respectively. In particular:
- Because light source 12 produces light with narrow bandwidths, a matrix that provides the colour transform for light source 12 will have smaller crosstalk compensation elements than an equivalent matrix for calibration light source 24. Thus, a colour transform for light source 12 may more reliably and stably relate irradiance of the light from light source 12 to colour channels of camera 23. The resulting colour transform will under-compensate for crosstalk between the wider-bandwidth light from calibration light source 24. By contrast, a colour transform relating the irradiance of light from calibration light source 24 to colour channels of camera 23 would yield excessive corrections that cause large negative contributions and over-compensation when applied to light source 12 and may therefore be less reliable and less stable.
- Light source 12 typically has a variable RGB balance. On the other hand, calibration light source 24 may have a fixed RGB balance and, in general may be designed to provide a desired reference irradiance and colour balance.

Notwithstanding the benefits of generating the colour transform for light source 12, this is not a mandatory selection. In another example implementation (see Example Implementation 2) the colour transform is generated for calibration light source 24.

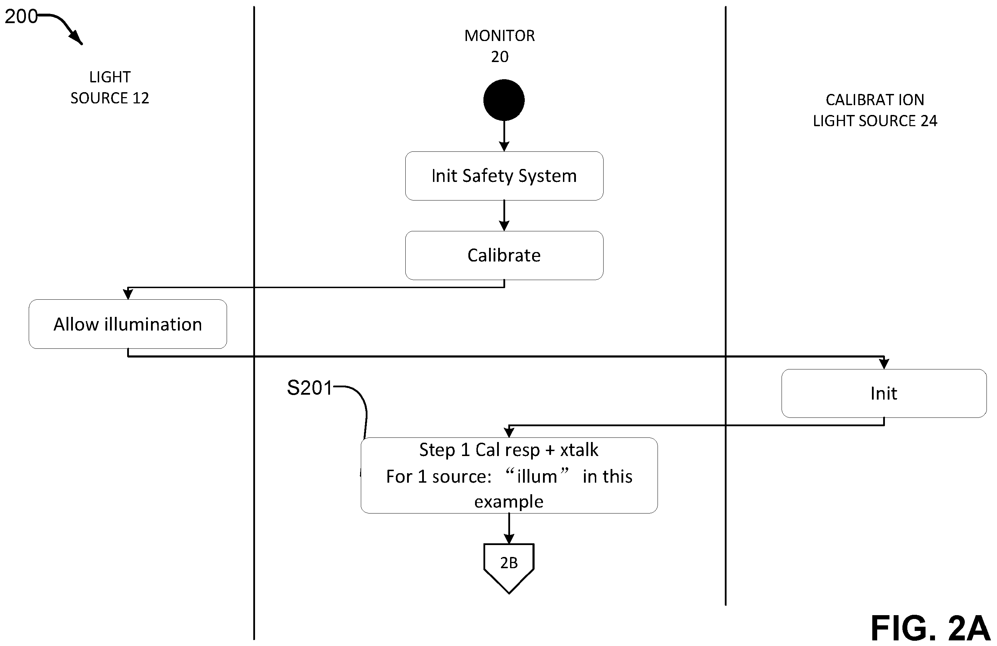

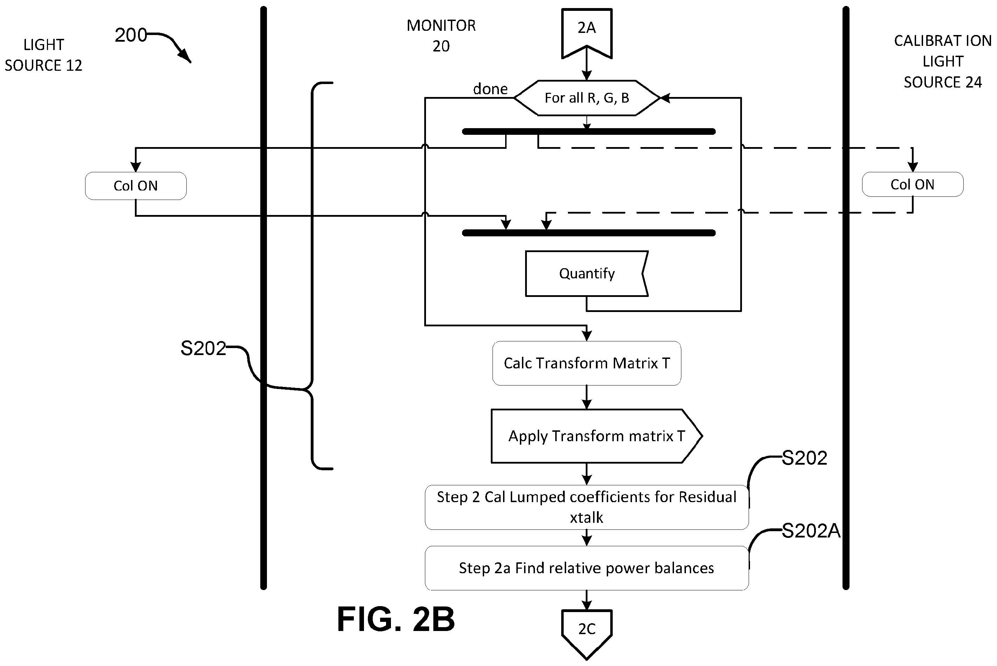

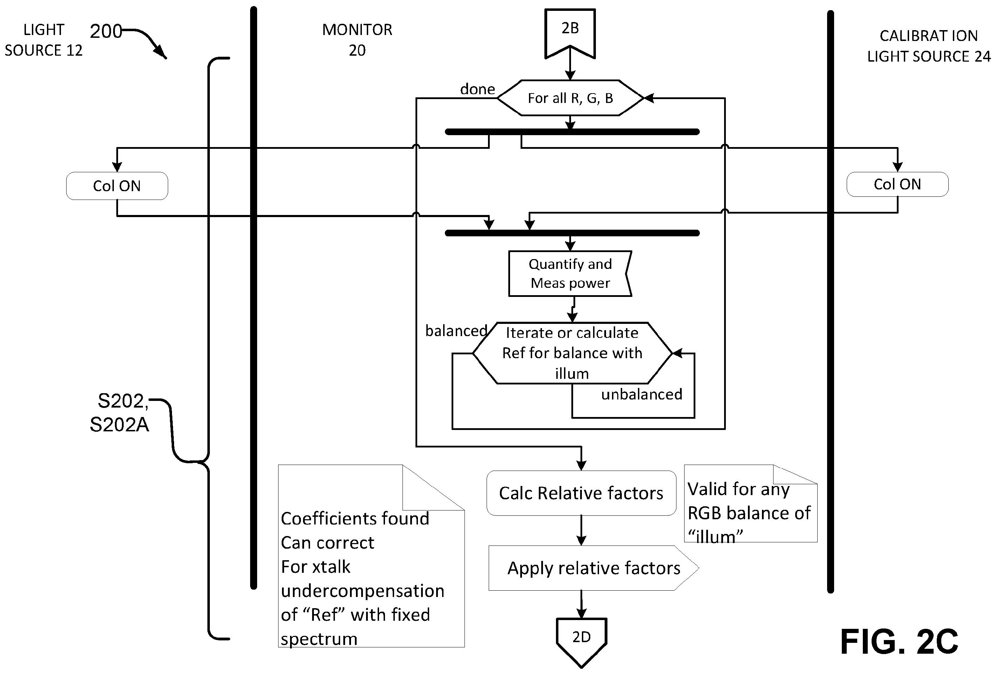

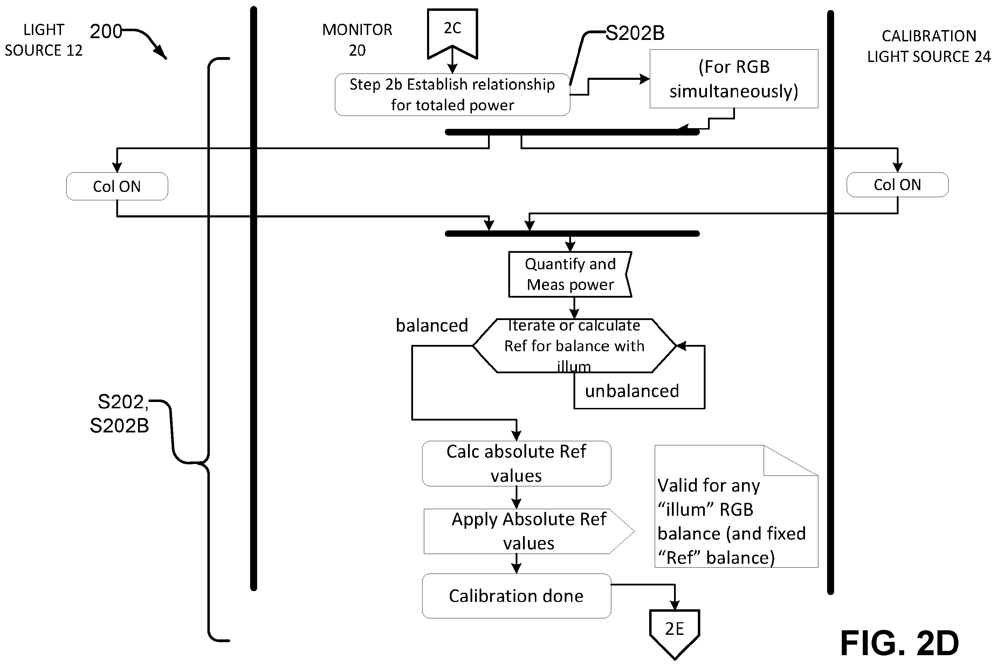

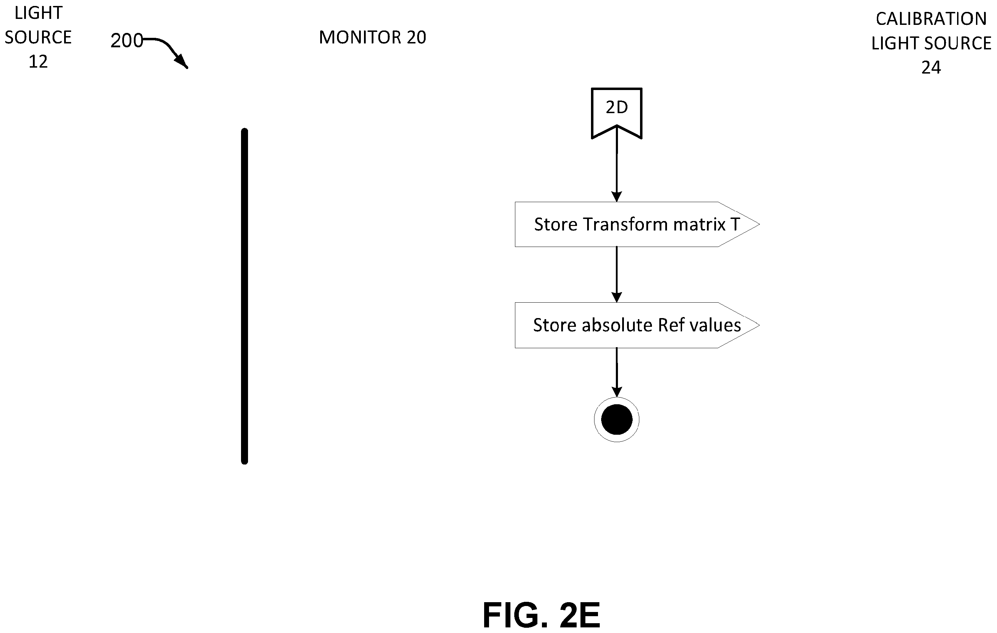

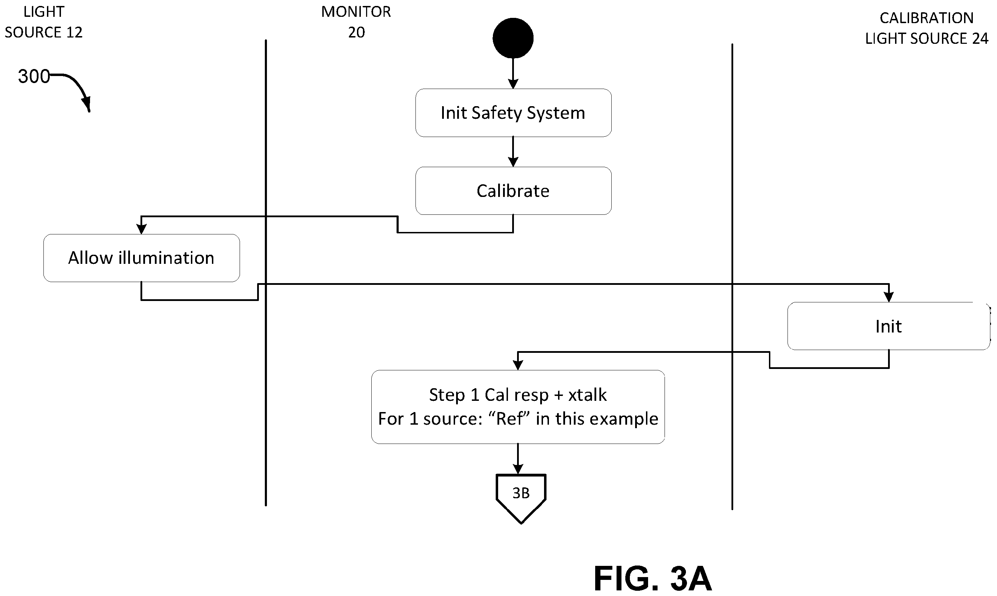

Figs. 2A to 2E (collectively Fig. 2) are a flow chart that illustrates a method 200 according to this example implementation 1. In Fig. 2, and also in Figs. 3A to 3E, the terms "Ref" or "Ref illumination" refer to illumination from calibration light source 24 but are not limited to the case where the referenced quantities are determined by direct measurement of an optical signal. In some embodiments the referenced values may be retrieved from a data store which contains one or more such referenced values as a fixed or reprogrammable value of a parameter. However, determining such values by direct measurement of an optical signal can result in improved accuracy and reliability.

At step S201 the responsiveness of sensor 22 to light from light source 12 is measured. Step S201 attempts to reduce crosstalk between the RGB output values of sensor 22 when illuminated by light from light source 12. This reduction in crosstalk can enable better accuracy in the following parts of method 200.

At step S202, lumped coefficients for residual crosstalk are calculated. Step S202 may involve, for example: steps S202A and S202B. Step S202A sets the power balance of calibration light source 24. This step attempts to set the RGB balance of calibration light source 24 in line with the typical RGB balance of light source 12. Step S202A can help to optimize the used range of sensor 22 with respect to the available usable (dynamic) range of sensor 22. The used range of sensor 22 should be above the noise floor of sensor 22 and below a saturation or clipping level of sensor 22. Appropriate control of the power balance of calibration light source 24 can enable a better accuracy in the step S202B.

Step 202B establishes a common scale factor (based on the power balance found in step 202A). The common scale factor links the response of sensor 22 to light from light source 12 to the response of sensor 22 to the light from calibration light source 24. The common scale factor may be applied to determine total irradiance of light from light source 12 (e.g., light from modulated light field 15). The total irradiance of light from light source 12 may be compared to a threshold.

Step S201 may, for example comprise the following procedure. For each colour (e.g., R, G, B) drive light source 12 to produce light of the colour at a corresponding power level. This causes light source 12 to output light of an unknown optical power *E_{e,col}* (where col is an index indicating the colour).

The power level may be the same or different for different colours. Ratios of the power levels for the different colours may be selected to correspond to a desired white point. The desired white point may be selected to be a "typical" white point for light source 12.

Set camera 23 to capture an image of the sampled light with suitable exposure settings and then record the resulting R,G,B output values. In some embodiments a colour transform built into camera 23 is set to a unity matrix for this step. The resulting RGB output values may be recorded in matrix form as follows: $\left[\begin{matrix}{R}_{{E}_{e , R}} & {G}_{{E}_{e , R}} & {B}_{{E}_{e , R}} \\ {R}_{{E}_{e , G}} & {G}_{{E}_{e , G}} & {B}_{{E}_{e , G}} \\ {R}_{{E}_{e , B}} & {G}_{{E}_{e , B}} & {B}_{{E}_{e , B}}\end{matrix}\right]$

Correct the recorded values to compensate for the power balance (i.e. the values of *E_{e,col}*. may not be the same for different colours). This may be done by finding the inverse of the matrix: $\left[\begin{matrix}{E}_{e , R} & 0 & 0 \\ 0 & {E}_{e , G} & 0 \\ 0 & 0 & {E}_{e , B}\end{matrix}\right]$ and multiplying the matrix of Equation 1 by the inverse of Equation 2 to yield a sensitivity matrix S as follows: $S = {\left[\begin{matrix}{E}_{e , R} & 0 & 0 \\ 0 & {E}_{e , G} & 0 \\ 0 & 0 & {E}_{e , B}\end{matrix}\right]}^{- 1} ⋅ \left[\begin{matrix}{R}_{{E}_{e , R}} & {G}_{{E}_{e , R}} & {B}_{{E}_{e , R}} \\ {R}_{{E}_{e , G}} & {G}_{{E}_{e , G}} & {B}_{{E}_{e , G}} \\ {R}_{{E}_{e , B}} & {G}_{{E}_{e , B}} & {B}_{{E}_{e , B}}\end{matrix}\right]$

Calculate the inverse matrix *T* = *S*⁻¹ and scale matrix *T* to yield a matrix *T_{scaled}* so that the maximum value on the diagonal of *T_{scaled}* has a value suitable for further processing (such as a value of 1.0). Note that scaling is not the same as normalization. The matrix *T_{scaled}* can then be applied as a colour transform to the output of camera 23.

In some embodiments camera 23 includes a colour transform unit and *T_{scaled}* may be uploaded into camera 23 so that the output from sensor 22 is automatically multiplied by *T_{scaled}* in camera 23. In general, *T_{scaled}* may be applied to the output from sensor 22 either in camera 23 or elsewhere along the signal path of the RGB output channels.

The effectiveness of *T_{scaled}* may be verified by operating light source 12 and camera 23 to obtain images for each colour individually. In each case the output colour channels (after processing by *T_{scaled}*) not corresponding to the current colour (e.g., when the current colour is R, the colour channels for G and B) should have values close to zero.

Applying the colour transform *T_{scaled}* significantly reduces crosstalk in the output channels of camera 23. This in turn facilitates summing of the levels under observation to yield total irradiance values.

The procedure above provides outputs that correspond to responsiveness 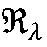 for the different colors of light from light source 12 which is proportional to irradiance. This allows total irradiance to be determined by summing the values 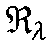 .

Step S202 may, for example comprise finding a correspondence between power levels for light emitters 25 of calibration light source 24 and power levels for light emitters 13 of light source 12 and then establishing a relationship between outputs of camera 23 and totaled optical power. The following procedure is an example of how this may be done. In this example an irradiance meter 40 (which may use any technology to measure optical power - e.g., the irradiance meter may comprise an optical power meter such as a bolometer, a spectrometer system, a photosensor based irradiance meter etc.) is applied to measure irradiance of light. Irradiance meter 40 may, for example, be arranged to measure irradiance of light at a specified location ("calibration location"). The calibration location may be, for example, a specified distance in front of projection optics 16. Irradiance meter 40 is only required for initial calibration and does not need to be present when projector system 10 is subsequently operated.

For each light emitter 13 (i.e., each primary colour) of light source 12 operate the light emitter 13 to emit light onto a sensor of the irradiance meter 40 and measure the irradiance of the light using the irradiance meter 40. It is preferable to adjust the optical power of the light detected by the irradiance meter 40 so that a specific calibration irradiance is detected by the irradiance meter 40. The calibration irradiance may be different for different primary colours.

The irradiance at the calibration location may be adjusted by one or more of adjusting the power level of the light emitter 13 and adjusting settings of modulation stage 14 (especially where modulation stage 14 includes a light steering unit). These adjustments are made so that the irradiance meter 40 indicates the calibration irradiance. In some embodiments, projector system 10 may be controlled to display a test pattern while the irradiance is being measured in step S202. The test pattern may, for example, include a high intensity spot at the calibration location. In some embodiments the high-intensity spot has an irradiance significantly higher at the calibration location than could be achieved by the light emitter 13 without light steering. The test pattern may, for example, comprise a pattern that has high intensity spots located at the ANSI points. Such test patterns may also be used for measuring luminance uniformity.

The calibration irradiance may, for example be:
- a maximum irradiance imposed by a standard that applies to projection system 10;
- a maximum irradiance minus a safety factor (e.g., 85%, 90%, 95% or 98% of the maximum irradiance); or
- some other irradiance level for which monitor 20 should be calibrated.

In some embodiments the calibration irradiance is, for example, a specified fraction of an allowed maximum irradiance weighted by the contribution of the primary colour at the desired white point. For example, where at the desired white point, R, G, and B respectively contribute 32%, 33% and 35% of the total irradiance, the power level for the R primary may be set to yield an irradiance that is 0.32 times the specified fraction of the allowed maximum irradiance. In some embodiments the specified fraction of the allowed maximum irradiance is in the range of 50% to 100%, for example 90%. The specified fraction is preferably in the range of 85% to 99% to provide a safety factor in the range of 1% to 15%.

While the primary colour is being delivered at the set power level, use camera 23 (more generally sensor 22) to measure the light of the primary colour at a location on sensor 22 corresponding to the calibration location to yield a corresponding sensor output value. For example, sensor output values may be determined for each of R, G, and B, light.

In some embodiments the above parts of S202 are performed for a plurality of calibration locations. This can assist in improving reliability of monitor 20.

The corresponding light emitter 25 of calibration light source 24 may then be operated to emit light of the corresponding colour and the power level for the light emitter 25 adjusted to find the power level at which the corresponding output for camera 23 is the same as the previously determined sensor output value for that colour. The power levels for each of light emitters 25 and/or the balance between the power levels for light emitters 25 may be recorded.

Next, light source 12 may be operated to emit light with light emitters 13 operating together with power levels for light emitters 13 set according to the desired white balance. The power levels for light emitters 13 may then be scaled up or down as necessary until the irradiance measured by the irradiance meter 40 is the specified fraction of the allowed maximum irradiance.

Next, calibration light source 24 may be operated to emit light with light emitters 25 operating together with their relative power levels set according to the balance determined above. The drive current for light emitters 25 may be scaled up or down as necessary while maintaining the balance until the output of camera 23 indicates an output equal to the specified fraction of the allowed maximum irradiance. The drive currents for light emitters 25 when this equality is satisfied may be saved as reference drive currents.

Once the reference drive currents for light emitters 25 have been established, monitor 20 may continuously monitor the output of camera 23 to evaluate: $\frac{R + G + B}{Rref + Gref + Bref}$ where R, G and B are R, G, and B output values from camera 23 monitoring modulated light field 15 and *R_{ref}, G_{ref}* and *B_{ref}* are the output values from camera 23 monitoring calibration light source 24 when light emitters 25 are driven with the reference drive currents. Eqn. (4) may be evaluated per pixel in region of light sensor 22 that receives light from modulated light field 15.

For example, monitor 20 may be tripped to perform an action if: $\frac{R + G + B}{Rref + Gref + Bref} \geq 1$ which indicates that the irradiance of light field 15 exceeds the specified fraction of the allowable maximum irradiance.

It is noteworthy that the divisor of $\frac{R + G + B}{Rref + Gref + Bref}$ may include substantial contributions from crosstalk (off-diagonal) terms. For example, *R_{ref,} G_{ref}* and *B_{ref}* may be expressed as follows: ${R}_{ref} = {E}_{e , Rref} ⋅ {k}_{Rref} + {E}_{e , Gref} ⋅ {χ}_{RGref} + {E}_{e , Bref} ⋅ {χ}_{RBref} > {E}_{e , Rref} ⋅ {k}_{Rref}$ ${G}_{ref} = {E}_{e , Rref} ⋅ {χ}_{GRref} + {E}_{e , Gref} ⋅ {k}_{Gref} + {E}_{e , Bref} ⋅ {χ}_{GBref} > {E}_{e , Gref} ⋅ {k}_{Gref}$ ${B}_{ref} = {E}_{e , Rref} ⋅ {χ}_{BRref} + {E}_{e , Gref} ⋅ {χ}_{BGref} + {E}_{e , Bref} ⋅ {k}_{Bref} > {E}_{e , Bref} ⋅ {k}_{Bref}$ where *χᵢⱼ* is the crosstalk term indicating the contribution to output channel *i, i* ∈ *{R, G, B*} by light *j_{ref},j_{ref}* ∈ {*R_{ref}, G_{ref}, B_{ref}*} from calibration light source 24. However, where the white balance of calibration light source 24 is fixed, the mutual balance between *E_{e,Rref}, E_{e,Gref}* and *E_{e,Bref}* does not change, the value of the divisor in Equation (4) scales with the radiance sum of *E_{e,Rref} + E_{e,Gref}+E_{e,Bref},* which is the sum that is calibrated. Hence any contributions to the divisor of Equation (4) from crosstalk terms can be considered to be lumped in one scale factor that is included in the calibration of the irradiance sum.

As mentioned above, in some embodiments calibration light emitters 25 comprise broadband light sources such as white LEDs. With this choice of light emitter 25 there will almost certainly be more residual crosstalk than in the case where light emitters 25 are narrower band light emitters such as R, G, B LEDs. This residual crosstalk may still be cancelled in method 200.

For example, for the case where all colours in calibration light 24A are emitted by white LEDs (in which different colour components cannot be individually controlled), Eqn. (6) could be restated as: ${R}_{ref} = {E}_{e , re f} ⋅ {k}_{Rref} + {E}_{e , ref} ⋅ {χ}_{RGref} + {E}_{e , ref} ⋅ {χ}_{RBref} > {E}_{e , ref} ⋅ {k}_{Rref}$ where *E_{e,ref}* is the radiance of the broadband calibration light emitter 25.

The ratio of response of sensor 22 to red light emitter 13 to that produced by red reference light emitter 25 may be expressed as: $\frac{{E}_{e , R} ⋅ {k}_{R} + 0 ⋅ {χ}_{RG} + 0 ⋅ {χ}_{RB}}{{E}_{e , Rref} ⋅ {k}_{Rref} + 0 ⋅ {χ}_{RGref} + 0 ⋅ {χ}_{RBref}}$ for the case where calibration light source 24 has one or more separate light emitters 25 which emit light having irradiance *E_{e,Rref}* corresponding to the red light emitter 13 which emits light having irradiance *E_{e,R}.* For the case where light emitters 25 of calibration light source 24 are broadband light emitters equation 10 becomes: $\frac{{E}_{e , R} ⋅ {k}_{R} + 0 ⋅ {χ}_{RG} + 0 ⋅ {χ}_{RB}}{{E}_{e , ref} ⋅ {k}_{ref} + {E}_{e , ref} ⋅ {χ}_{RGref} + {E}_{e , ref} ⋅ {χ}_{RBref}}$ The denominator of Eqn. 11 clearly includes more residual crosstalk as compared to Eqn. 10. However, that does not matter since the denominator of Eqn. (11) is included in one scale factor that is used in the calibration of the irradiance sum so the remaining calculations are not affected. The calculations for the other primary colours (e.g., G, and B) work the same way.

A consequence of using light emitters 25 that have a fixed colour balance in calibration light source 24 is that fine tuning of the colour balance of calibration light 24A is not possible. However, that turns out not to be a significant problem in most cases. Broadband light emitters 25 may be selected so that the spectrum of emitted light is at different wavelengths is well within the useful range of sensor 22.

It can be appreciated that the method described above exploits the fact that optical energy of the light from light source 12 and calibration light source 24 is almost entirely concentrated at a few specific wavelengths (for example 6 specific wavelengths). With this discontinuous spectrum the response curves of the sensor 22 sensor are in fact "sampled" in 6 discrete and more or less narrow ranges of wavelengths. Hence, instead of having to consider the entirety of spectral response curves, R, G and B, 6 values are sufficient. Moreover the 6 values are close linked per color (i.e. calibration light 24A can consist of light having a plurality of discrete wavelengths that are each close to a corresponding discrete wavelength of light from light source 12). This allows ratios of responses of sensor 22 to the three pairs of corresponding wavelengths to be used in the calibration so their 3 ratios can be used.

Another benefit of the calibration method as described herein is that the calibration can automatically take account of the conversion to radiometric units *Eₑ* (optical energy) from light intensity *Eᵥ*. Since we are concerned with discrete wavelengths of light in narrow bands, for the source primaries of light source 12: *E_{e,col} = C_{λ,col}* · *E_{v,col}* where *C_{λ,col}* is a constant that has a value that is different for each wavelength of light. Similarly, for calibration light source 24
*E_{e,Ref,col} = C_{λ,Ref,col}* · *E_{v,Ref,col}.*

Because the calibration procedure described above makes use of relative comparisons between the irradiance of light from light source 12 and the irradiance of calibration light 24A, the ratios of these constants may be considered to be of primary importance. Therefore, the numerical values of the constants *C_{λ,col}* and *C_{λ,Ref,col}* do not need to be known. The calibration outcome from the above process incorporates the factors necessary to compare optical energy of calibration light 24A and light from light source 12. Even the typically small deviation between *C_{λ,col}* and *C_{λ,Ref,col}* is incorporated in the calibrated driving currents for calibration light source 24.

Thus, calibration as described above can establish a relative scaling applied to the RGB response of camera 23 so that the results have the correct proportions to represent relative Eₑ values. Relative Eₑ values may be further scaled to absolute Eₑ values up to a calibration factor for the effect of projection optics 16.

### Example Implementation 2

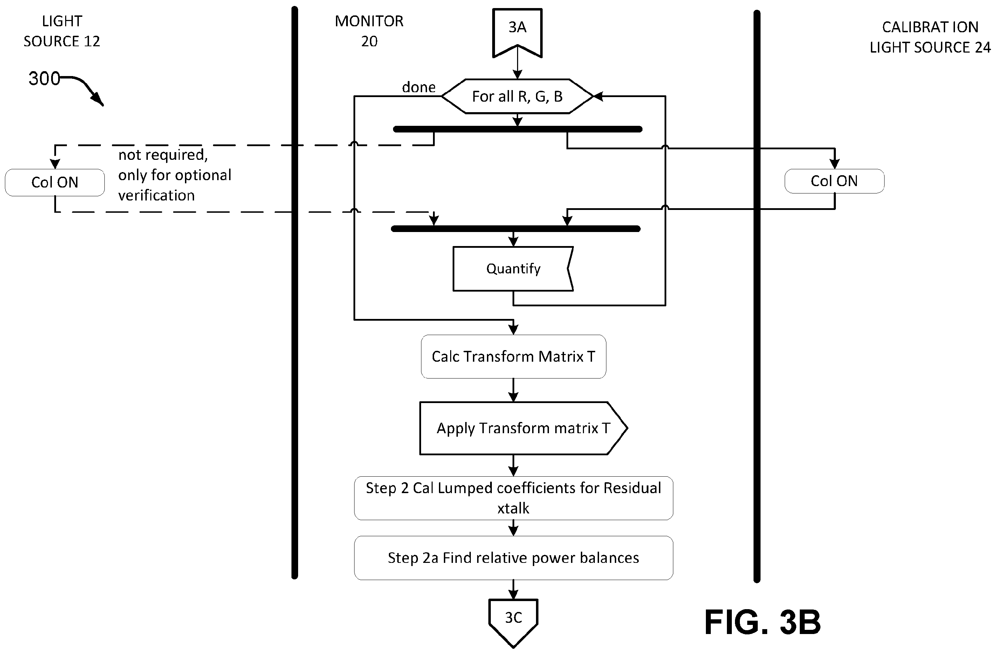

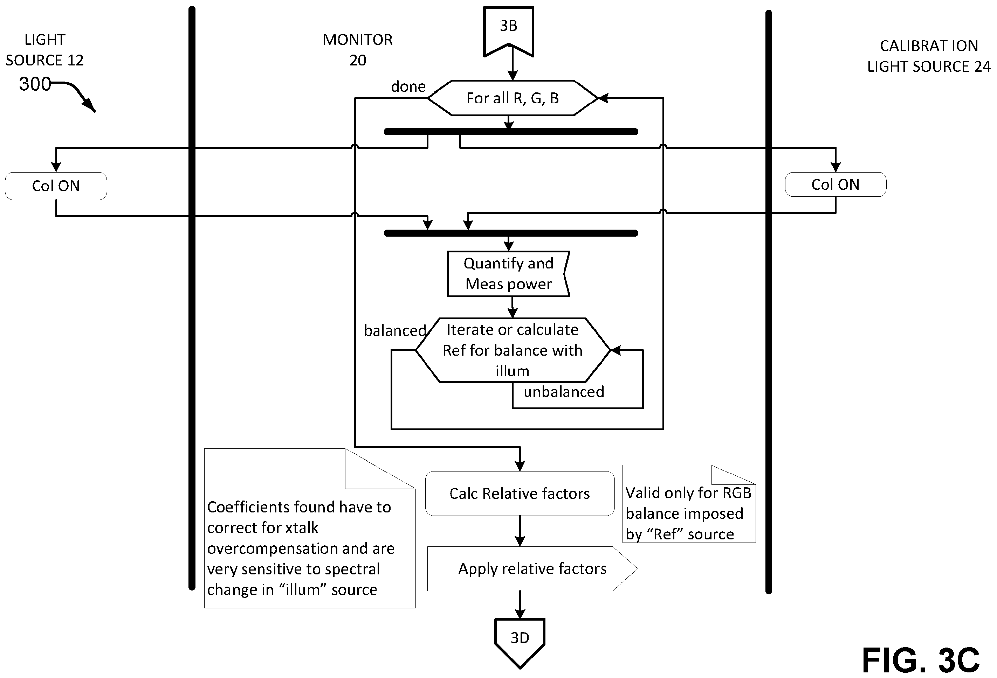

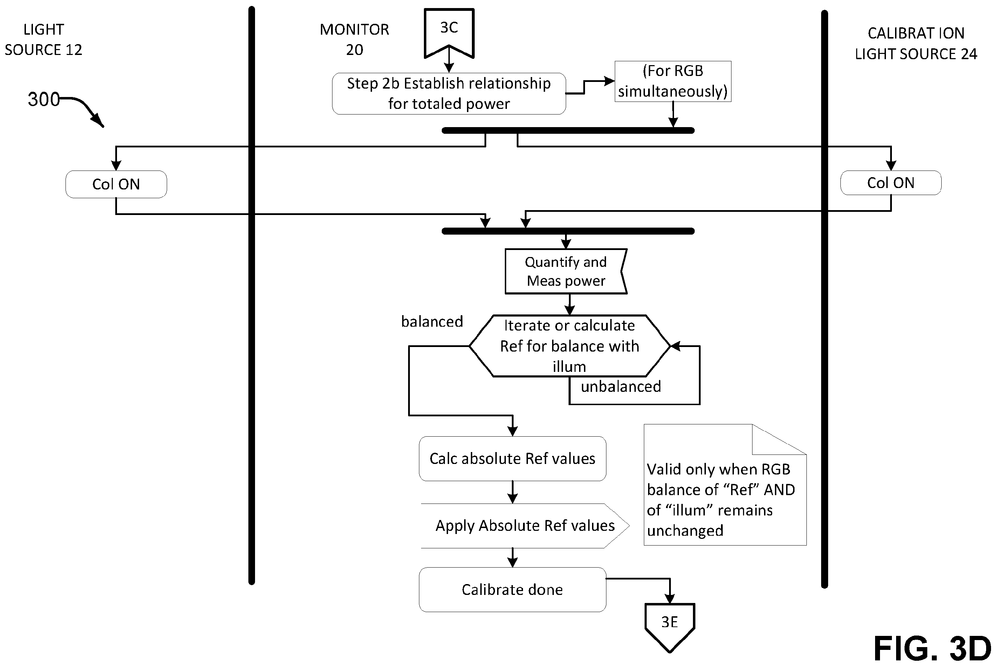

Fig. 3 illustrates a method 300 that is similar to method 200 except that method 300 begins with a calibration step S301 which performs a calibration of camera 22 that can be carried out using light from calibration light source 24 alone.

### Example Control System

One application of the technology described above is improving the safety of high power projector systems. The output of a monitor 20 that checks for irradiance exceeding a threshold (whether or not the monitor 20 operates in any of the ways described herein) may be applied as described above to limit the maximum irradiance of light output by a projector to not exceed some threshold. The threshold may be chosen to be at a level that is acceptably safe (e.g., a level that complies with accepted safety standards).

For some applications higher optical power outputs may be desired. As mentioned above, highlights, even small highlights, that are high in optical power can help to provide a very vibrant high-impact viewing experience. Such highlights may be safe to view on a screen. However, generating such highlights in images projected onto the screen may require a projector to output light that has irradiance levels above a safe threshold at locations between the projector and the screen (e.g., such that a person could damage their eyes by looking into the projector instead of at the screen).

One way to address this problem is to exclude people from being able to enter a region through which light passes from the projector to the screen (e.g., with a rear projection screen or by providing physical barriers. This solution is often not practical or optimum.

In some embodiments, operation of a monitor 20 to limit irradiance of the light output by a projector system is inhibited as long as no person (or no object) intrudes into the region through which light passes from the projector to the screen. An intrusion detector, for example, a LIDAR system, an optical curtain, or the like, may be provided and operated to detect unauthorized entry into the region through which the light passes.

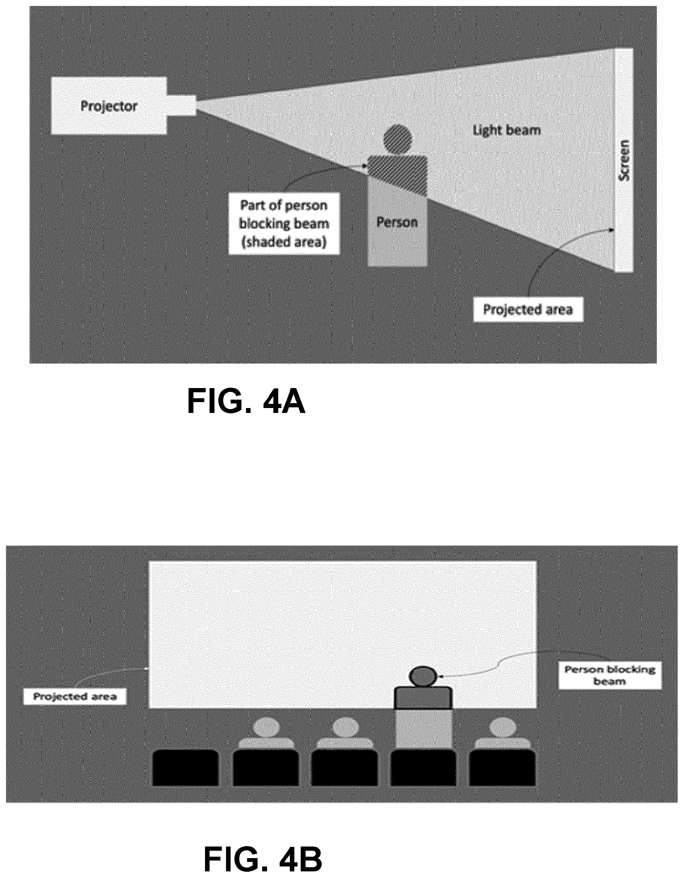

Another way to detect intrusion into the region is to detect shadows on the screen (e.g., by observing the screen with a camera (e.g., an infrared camera) and processing images from the camera to detect shadows which show that a person or object has intruded into the projector beam). This is illustrated in Figures 4A and 4B. For example: a neural network may be connected to process images from the camera to detect shadows on the screen or a neural network or other computer system may be applied to detect differences between image data 17 that defines an image being projected and an image of the screen taken by the camera of the intrusion detection system that would indicate the presence of shadows.

If monitor 20 detects that the light being projected by the projector system has an irradiance that exceeds a threshold value and also the intrusion detector indicates an intrusion into the region then corrective action may be taken. The corrective action may, by way of non-limiting example, comprise one or more of:
- limiting irradiance of the projected light (e.g., in any of the ways described elsewhere herein);
- limiting the irradiance of a portion of the projected light that impinges on or passes close to (e.g., within a threshold distance of) a person or object detected in the region through which the projector beam passes;
- blocking some or all light from the projector; or
- shutting off the projector.

In some embodiments the intrusion detector has a ranging capability (i.e. is operable to determine whether any person or object is in the region through which light passes from the projector to the screen and is closer to projection optics 16 than a set distance. In such embodiments the corrective action may optionally be taken only in cases where the intruding person or object is closer to projection optics 16 than the set distance.

Where a component (e.g., a software module, processor, assembly, device, circuit, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

Embodiments of the invention may be implemented using specifically designed hardware, configurable hardware, programmable data processors configured by the provision of software (which may optionally comprise "firmware") capable of executing on the data processors, special purpose computers or data processors that are specifically programmed, configured, or constructed to perform one or more steps in a method as explained in detail herein and/or combinations of two or more of these. Examples of specifically designed hardware are: logic circuits, application-specific integrated circuits ("ASICs"), large scale integrated circuits ("LSIs"), very large scale integrated circuits ("VLSIs"), and the like. Examples of configurable hardware are: one or more programmable logic devices such as programmable array logic ("PALs"), programmable logic arrays ("PLAs"), and field programmable gate arrays ("FPGAs"). Examples of programmable data processors are: microprocessors, digital signal processors ("DSPs"), embedded processors, graphics processors, math co-processors, general purpose computers, server computers, cloud computers, mainframe computers, computer workstations, and the like. For example, one or more data processors in a control circuit for a device may implement methods as described herein by executing software instructions in a program memory accessible to the processors.

Processing may be centralized or distributed. Where processing is distributed, information including software and/or data may be kept centrally or distributed. Such information may be exchanged between different functional units by way of a communications network, such as a Local Area Network (LAN), Wide Area Network (WAN), or the Internet, wired or wireless data links, electromagnetic signals, or other data communication channel.

The invention may also be provided in the form of a program product. The program product may comprise any non-transitory medium which carries a set of computer-readable instructions which, when executed by a data processor, cause the data processor to execute a method of the invention. Program products according to the invention may be in any of a wide variety of forms. The program product may comprise, for example, non-transitory media such as magnetic data storage media including floppy diskettes, hard disk drives, optical data storage media including CD ROMs, DVDs, electronic data storage media including ROMs, flash RAM, EPROMs, hardwired or preprogrammed chips (e.g., EEPROM semiconductor chips), nanotechnology memory, or the like. The computer-readable signals on the program product may optionally be compressed or encrypted.

In some embodiments, the invention may be implemented in software. For greater clarity, "software" includes any instructions executed on a processor, and may include (but is not limited to) firmware, resident software, microcode, code for configuring a configurable logic circuit, applications, apps, and the like. Both processing hardware and software may be centralized or distributed (or a combination thereof), in whole or in part, as known to those skilled in the art. For example, software and other modules may be accessible via local memory, via a network, via a browser or other application in a distributed computing context, or via other means suitable for the purposes described above.

Software and other modules may reside on servers, workstations, personal computers, tablet computers, and other devices suitable for the purposes described herein.

### Interpretation of Terms

Unless the context clearly requires otherwise, throughout the description and the claims:
- "irradiance" means the radiant flux (power) delivered to a surface per unit area. Irradiance may be expressed in watts per square metre (W·m⁻²).
- "comprise", "comprising", and the like are to be construed in an inclusive sense, as opposed to an exclusive or exhaustive sense; that is to say, in the sense of "including, but not limited to";
- "connected", "coupled", or any variant thereof, means any connection or coupling, either direct or indirect, between two or more elements; the coupling or connection between the elements can be physical, logical, or a combination thereof;
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms. These terms ("a", "an", and "the") mean one or more unless stated otherwise;
- "and/or" is used to indicate one or both stated cases may occur, for example A and/or B includes both (A and B) and (A or B);
- "approximately" when applied to a numerical value means the numerical value ± 10%;
- where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
- "first" and "second" are used for descriptive purposes and cannot be understood as indicating or implying relative importance or indicating the number of indicated technical features.

Words that indicate directions such as "vertical", "transverse", "horizontal", "upward", "downward", "forward", "backward", "inward", "outward", "left", "right", "front", "back", "top", "bottom", "below", "above", "under", and the like, used in this description and any accompanying claims (where present), depend on the specific orientation of the apparatus described and illustrated. The subject matter described herein may assume various alternative orientations. Accordingly, these directional terms are not strictly defined and should not be interpreted narrowly.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Certain numerical values described herein are preceded by "about". In this context, "about" provides literal support for the exact numerical value that it precedes, the exact numerical value ±5%, as well as all other numerical values that are near to or approximately equal to that numerical value. Unless otherwise indicated a particular numerical value is included in "about" a specifically recited numerical value where the particular numerical value provides the substantial equivalent of the specifically recited numerical value in the context in which the specifically recited numerical value is presented. For example, a statement that something has the numerical value of "about 10" is to be interpreted as: the set of statements:
in some embodiments the numerical value is 10;
- in some embodiments the numerical value is in the range of 9.5 to 10.5;
and if from the context the person of ordinary skill in the art would understand that values within a certain range are substantially equivalent to 10 because the values with the range would be understood to provide substantially the same result as the value 10 then "about 10" also includes:
- in some embodiments the numerical value is in the range of C to D where C and D are respectively lower and upper endpoints of the range that encompasses all of those values that provide a substantial equivalent to the value 10

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

As will be apparent to those of skill in the art upon reading this disclosure, each of the individual embodiments described and illustrated herein has discrete components and features which may be readily separated from or combined with the features of any other described embodiment(s) without departing from the scope of the present invention.

Any aspects described above in reference to apparatus may also apply to methods and vice versa.

Any recited method can be carried out in the order of events recited or in any other order which is logically possible. For example, while processes or blocks are presented in a given order, alternative examples may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, simultaneously or at different times.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible). This is the case even if features A and B are illustrated in different drawings and/or mentioned in different paragraphs, sections or sentences.

The scope of the claims should not be limited by the preferred embodiments set forth in the examples, but should be limited only by the scope of the appended claims.

## Claims

1. A light projection system (10) comprising:
a light source (12) operative to emit a light field;
output optics (16) arranged to project the light of the light field; and
an irradiance monitor (20) comprising:
a light sampling element (21) arranged to redirect a fraction of the light from the light field onto a first portion (22-1) of a light sensor (22);
**characterized in that** the light projection system further comprises:
a calibration light source (24) comprising one or more calibration light emitters (25) operative to emit calibration light (24A), the calibration light source (24) arranged to direct the calibration light (24A) to illuminate a second portion (22-2) of the light sensor (22); and
a processor (26) connected to receive image data (27) from the light sensor (22) and to process the image data (27) to determine whether light incident on the first portion of the light sensor (22) has an irradiance in excess of an irradiance threshold based on a response of the light sensor (22) to the calibration light (24A) and the fraction of the light from the light field.

2. The light projection system (10) according to claim 1 comprising a modulation stage (14) operative to modulate the light field from the light source (12) to yield a modulated light field (15) wherein the light sampling element (21) samples the modulated light field (15) or wherein the modulation stage (14) comprises a light steering unit (14A) operative to concentrate light from the light source (12) into regions having irradiance greater than irradiance of light incident on the light steering unit (14A) from the light source (12).

3. The light projection system (10) according to any one of claims 1 or 2 wherein the light source (12) comprises a plurality of light emitters (13) each operative to emit light in a corresponding one of a first plurality of narrow wavelength bands, or wherein the first plurality of narrow wavelength bands is made up of a first red (R) band, a first green (G) band and a first blue (B) band.

4. The light projection system (10) according to any one of claims 1 to 3 wherein the calibration light source (24) comprises a plurality of light emitters (25) which each emit light in a corresponding one of a second plurality of wavelength bands, or
wherein the calibration light source (24) comprises one or more broadband light emitters or one or more light emitting diodes (LEDs), wherein the broadband light emitters comprise white light emitters, or
wherein the calibration light source (24) comprises one or more reference sets of light emitters that are used sparingly to determine aging compensation for other sets of light emitters of the calibration light source (24), wherein the aging compensation comprises adjusting driving currents for the other sets of light emitters of the calibration light source (24) so that light outputs of the other sets of light emitters match light outputs of corresponding ones of the reference sets of light emitters.

5. The light projection system (10) according to any one of claims 1 to 4 wherein the light sensor (22) comprises an imaging light sensor (22) operative to output the image data (27), or an RGB light sensor (22).

6. The light projection system (10) according to any one of claims 1 to 5 wherein the projected light includes frames projected at a frame rate and the light sensor (22) measures the light from the light field at a rate that is at least twice the frame rate, or wherein the light sensor (22) measures the light from the light field at a rate that is at least once every 5 milliseconds or 3 milliseconds.

7. The light projection system (10) according to any one of claims 1 to 6 wherein the light projection system (10) is configured to apply a colour transform to the image data (27) to yield transformed image data in which cross talk between colour channels of the image data is reduced.

8. The light projection system (10) according to claim 7 wherein values in the transformed image data is indicative of irradiance, or wherein the colour transform is representable as a 3X3 matrix, or wherein the light sensor (22) comprises a RGB sensor that is part of a colour camera (23), the colour transform is performed by the camera (23) and the processor (26) processes the transformed image data from the camera (23).

9. The light projection system (10) according to any one of claims 1 to 8 wherein, the processor (26) is configured to, in response to determining that the light incident on the first portion (22-1) of the light sensor (22) has an irradiance in excess of the irradiance threshold, shut off or dim the light source (12) and/or operate a shutter to block light from being projected by the output optics (16).

10. The light projection system (10) according to any one of claims 1 to 9 further comprising an intrusion detection system operative to detect intrusion of persons or objects into a region that includes a beam of light projected by projection optics (16) wherein the processor (26) is configured to, in response to determining that the light incident on the first portion (22-1) of the light sensor (22) has an irradiance in excess of the irradiance threshold and receiving an input from the intrusion detection system indicating an intrusion, shut off or dim the light source (12) and/or operate a shutter to block light from being projected by the output optics (16), or
wherein the intrusion detection system includes a range finder operative to determine whether any detected persons or objects are closer than a threshold distance to the projection optics (16) wherein the processor (26) is configured to, in response to determining that the light incident on the first portion (22-1) of the light sensor (22) has an irradiance in excess of the irradiance threshold and receiving an input from the intrusion detection system indicating an intrusion of a person or object that is closer to the projection optics (16) than the threshold distance, shut off or dim the light source (12) and/or operate a shutter to block light from being projected by the projection optics (16).

11. The light projection system (10) according to any one of claims 1 to 10 wherein the light source (12) comprises a plurality of laser light emitters (13) or wherein the laser light emitters (13) each emit light having bandwidth of 15nm or less.

12. The light projection system (10) according to any one of claims 1 to 11 wherein the light sampling element (21) comprises a beam splitter or the light sampling element (21) redirects less than 5% of the light from the light field onto the light sensor.

13. The light projection system (10) according to any one of claims 1 to 12 wherein the output optics (16) comprise a zoom lens that is adjustable to provide different throw ratios, the irradiance monitor (20) configured to receive an input identifying a zoom setting of the zoom lens.

14. The light projection system (10) according to claim 13 wherein the input identifying the zoom setting is provided from plural redundant zoom position sensors, or wherein, in response to changes in the zoom setting, the irradiance monitor (20):
adjusts a trip level of the irradiance monitor (20) to compensate for differences in the zoom setting;
if the current zoom setting is larger than a threshold, inhibits operation of the light source (12) operative to emit the light field and/or operates the light source (12) at a lower power setting and/or introduces an optical attenuator into a light path of the light projection system (10) and/or disables light steering and/or controls light steering to at least partially dump light from the light field and/or issues a warning signal; and/or
changes the zoom setting of the output optics (16).

15. A calibration method for the light projection system of claim 1, the method comprising:
developing a colour transform for the light source (12) and/or the calibration light source (24) based at least in part on the image data (27); and
at least partially determining residual crosstalk and/or scaling to absolute irradiance levels.

## Patentansprüche

1. Lichtprojektionssystem (10), umfassend:
eine Lichtquelle (12), die funktionell dazu ausgelegt ist, ein Lichtfeld zu emittieren;
Ausgabeoptik (16), die dazu angeordnet ist, das Licht des Lichtfeldes zu projizieren; und
einen Bestrahlungsstärkemonitor (20), umfassend:
ein Lichtabtastelement (21), das dazu angeordnet ist, eine Fraktion des Lichts aus dem Lichtfeld auf einen ersten Abschnitt (22-1) eines Lichtsensors (22) umzuleiten; **dadurch gekennzeichnet, dass** das Lichtprojektionssystem ferner umfasst:
eine Kalibrierungslichtquelle (24), die einen oder mehrere Kalibrierungslichtemitter (25) umfasst, die funktionell dazu ausgelegt sind, Kalibrierungslicht (24A) zu emittieren, wobei die Kalibrierungslichtquelle (24) dazu angeordnet ist, das Kalibrierungslicht (24A) so zu leiten, dass es einen zweiten Abschnitt (22-2) des Lichtsensors (22) beleuchtet; und
einen Prozessor (26), der verbunden ist, um Bilddaten (27) vom Lichtsensor (22) zu empfangen und die Bilddaten (27) zu verarbeiten, um zu bestimmen, ob das auf den ersten Abschnitt des Lichtsensors (22) einfallende Licht eine Bestrahlungsstärke aufweist, die eine Bestrahlungsstärkeschwelle überschreitet, basierend auf einer Antwort des Lichtsensors (22) auf das Kalibrierungslicht (24A) und die Fraktion des Lichts aus dem Lichtfeld.

2. Lichtprojektionssystem (10) gemäß Anspruch 1, umfassend eine Modulationsstufe (14), die funktionell dazu ausgelegt ist, das Lichtfeld von der Lichtquelle (12) zu modulieren, um ein moduliertes Lichtfeld (15) zu erzeugen, wobei das Lichtabtastelement (21) das modulierte Lichtfeld (15) abtastet oder wobei die Modulationsstufe (14) eine Lichtlenkeinheit (14A) umfasst, die funktionell dazu ausgelegt ist, Licht von der Lichtquelle (12) in Bereiche zu bündeln, die eine höhere Bestrahlungsstärke aufweisen als die Bestrahlungsstärke des von der Lichtquelle (12) auf die Lichtlenkeinheit (14A) einfallenden Lichts.

3. Lichtprojektionssystem (10) gemäß einem der Ansprüche 1 oder 2, wobei die Lichtquelle (12) eine Mehrzahl von Lichtemittern (13) umfasst, von denen jeder funktionell dazu ausgelegt ist, Licht in einem entsprechenden einer ersten Mehrzahl von schmalen Wellenlängenbändern zu emittieren, oder wobei die erste Mehrzahl von schmalen Wellenlängenbändern aus einem ersten roten (R) Band, einem ersten grünen (G) Band und einem ersten blauen (B) Band besteht.

4. Lichtprojektionssystem (10) gemäß einem der Ansprüche 1 bis 3, wobei die Kalibrierungslichtquelle (24) eine Mehrzahl von Lichtemittern (25) umfasst, die jeweils Licht in einem entsprechenden einer zweiten Mehrzahl von Wellenlängenbändern emittieren, oder
wobei die Kalibrierungslichtquelle (24) einen oder mehrere Breitbandlichtemitter oder eine oder mehrere Leuchtdioden (LEDs) umfasst, wobei die Breitbandlichtemitter Weißlichtemitter umfassen, oder
wobei die Kalibrierungslichtquelle (24) einen oder mehrere Referenzsätze von Lichtemittern umfasst, die sparsam verwendet werden, um die Alterungskompensation für andere Sätze von Lichtemittern der Kalibrierungslichtquelle (24) zu bestimmen, wobei die Alterungskompensation das Einstellen von Ansteuerungsströmen für die anderen Sätze von Lichtemittern der Kalibrierungslichtquelle (24) umfasst, sodass die Lichtleistungen der anderen Sätze von Lichtemittern mit den Lichtleistungen von entsprechenden der Referenzsätze von Lichtemittern übereinstimmen.

5. Lichtprojektionssystem (10) gemäß einem der Ansprüche 1 bis 4, wobei der Lichtsensor (22) einen Bildgebungslichtsensor (22), der funktionell dazu ausgelegt ist, die Bilddaten (27) auszugeben, oder einen RGB-Lichtsensor (22) umfasst.

6. Lichtprojektionssystem (10) gemäß einem der Ansprüche 1 bis 5, wobei das projizierte Licht Frames beinhaltet, die mit einer Framerate projiziert werden, und der Lichtsensor (22) das Licht aus dem Lichtfeld mit einer Rate misst, die mindestens doppelt so hoch ist wie die Framerate, oder wobei der Lichtsensor (22) das Licht aus dem Lichtfeld mit einer Rate misst, die mindestens einmal alle 5 Millisekunden oder 3 Millisekunden beträgt.

7. Lichtprojektionssystem (10) gemäß einem der Ansprüche 1 bis 6, wobei das Lichtprojektionssystem (10) dazu konfiguriert ist, eine Farbtransformation auf die Bilddaten (27) anzuwenden, um transformierte Bilddaten zu erzeugen, bei denen Übersprechen zwischen den Farbkanälen der Bilddaten reduziert ist.

8. Lichtprojektionssystem (10) gemäß Anspruch 7, wobei die Werte in den transformierten Bilddaten die Bestrahlungsstärke angeben oder wobei die Farbtransformation als 3×3-Matrix darstellbar ist oder wobei der Lichtsensor (22) einen RGB-Sensor umfasst, der Teil einer Farbkamera (23) ist, die Farbtransformation von der Kamera (23) durchgeführt wird und der Prozessor (26) die transformierten Bilddaten von der Kamera (23) verarbeitet.

9. Lichtprojektionssystem (10) gemäß einem der Ansprüche 1 bis 8, wobei der Prozessor (26) dazu konfiguriert ist, dass er als Antwort auf das Bestimmen, dass das auf den ersten Abschnitt (22-1) des Lichtsensors (22) einfallende Licht eine Bestrahlungsstärke aufweist, die die Bestrahlungsstärkeschwelle überschreitet, die Lichtquelle (12) abschaltet oder dimmt und/oder einen Verschluss betätigt, um zu verhindern, dass Licht von der Ausgabeoptik (16) projiziert wird.

10. Lichtprojektionssystem (10) gemäß einem der Ansprüche 1 bis 9, das ferner ein Einbruchsdetektionssystem umfasst, das funktionell dazu ausgelegt ist, das Eindringen von Personen oder Gegenständen in einen Bereich zu detektieren, der einen von Projektionsoptik (16) projizierten Lichtstrahl beinhaltet, wobei der Prozessor (26) dazu konfiguriert ist, als Antwort auf das Bestimmen, dass das auf den ersten Abschnitt (22-1) des Lichtsensors (22) einfallende Licht eine Bestrahlungsstärke aufweist, die die Bestrahlungsstärkeschwelle überschreitet, und auf das Empfangen einer Eingabe von dem Einbruchsdetektionssystem, die ein Eindringen angibt, die Lichtquelle (12) abzuschalten oder zu dimmen und/oder einen Verschluss zu betätigen, um zu verhindern, dass Licht von der Ausgabeoptik (16) projiziert wird, oder
wobei das Einbruchsdetektionssystem einen Entfernungsmesser beinhaltet, der funktionell dazu ausgelegt ist, zu bestimmen, ob sich detektierte Personen oder Objekte näher als in einem Schwellenabstand zur Projektionsoptik (16) befinden, wobei der Prozessor (26) dazu konfiguriert ist, als Antwort auf das Bestimmen, dass das auf den ersten Abschnitt (22-1) des Lichtsensors (22) einfallende Licht eine Bestrahlungsstärke aufweist, die die Bestrahlungsstärkeschwelle überschreitet, und auf das Empfangen einer Eingabe vom Einbruchsdetektionssystem, die ein Eindringen einer Person oder eines Objekts angibt, das sich näher an der Projektionsoptik (16) befindet als in dem Schwellenabstand, die Lichtquelle (12) abzuschalten oder zu dimmen und/oder einen Verschluss zu betätigen, um zu verhindern, dass Licht von der Projektionsoptik (16) projiziert wird.

11. Lichtprojektionssystem (10) gemäß einem der Ansprüche 1 bis 10, wobei die Lichtquelle (12) eine Mehrzahl von Laserlichtemittern (13) umfasst oder wobei die Laserlichtemitter (13) jeweils Licht emittieren, dass eine Bandbreite von 15 nm oder weniger aufweist.

12. Lichtprojektionssystem (10) gemäß einem der Ansprüche 1 bis 11, wobei das Lichtabtastelement (21) einen Strahlteiler umfasst oder das Lichtabtastelement (21) weniger als 5 % des Lichts aus dem Lichtfeld auf den Lichtsensor umleitet.

13. Lichtprojektionssystem (10) gemäß einem der Ansprüche 1 bis 12, wobei die Ausgabeoptik (16) eine Zoomlinse umfasst, die einstellbar ist, um unterschiedliche Projektionsverhältnisse bereitzustellen, und der Bestrahlungsstärkemonitor (20) dazu konfiguriert ist, eine Eingabe zu empfangen, die eine Zoomeinstellung der Zoomlinse identifiziert.

14. Lichtprojektionssystem (10) gemäß Anspruch 13, wobei die die Zoomeinstellung identifizierende Eingabe von mehreren redundanten Zoompositionssensoren bereitgestellt wird oder wobei der Bestrahlungsstärkemonitor (20) als Antwort auf Änderungen der Zoomeinstellung:
ein Auslöseniveau des Bestrahlungsstärkemonitors (20) einstellt, um Unterschiede in der Zoomeinstellung auszugleichen;
wenn die aktuelle Zoomeinstellung größer als eine Schwelle ist, den Betrieb der Lichtquelle (12) unterbindet, die funktionell dazu ausgelegt ist, das Lichtfeld zu emittieren, und/oder die Lichtquelle (12) mit einer niedrigen Leistungseinstellung betreibt und/oder einen optischen Dämpfer in einen Lichtweg des Lichtprojektionssystems (10) einfügt und/oder die Lichtlenkung deaktiviert und/oder die Lichtlenkung so steuert, dass Licht aus dem Lichtfeld mindestens teilweise abgeleitet wird, und/oder ein Warnsignal ausgibt; und/oder
die Zoomeinstellung der Ausgabeoptik (16) ändert.

15. Kalibrierungsverfahren für das Lichtprojektionssystem nach Anspruch 1, wobei das Verfahren umfasst:
Entwickeln einer Farbtransformation für die Lichtquelle (12) und/oder die Kalibrierungslichtquelle (24), mindestens teilweise basierend auf den Bilddaten (27); und
mindestens teilweise Bestimmen des Restübersprechens und/oder Skalieren auf absolute Bestrahlungsstärkeniveaus.

## Revendications

1. Système de projection de lumière (10), comprenant :
une source de lumière (12) opérationnelle pour émettre un champ lumineux ;
une optique de sortie (16) agencée pour projeter la lumière du champ lumineux ; et
un moniteur d'irradiance (20) comprenant :
un élément d'échantillonnage de lumière (21) agencé pour rediriger une fraction de la lumière provenant du champ lumineux sur une première partie (22-1) d'un capteur de lumière (22) ;
**caractérisé en ce que** le système de projection de lumière comprend en outre :
une source de lumière d'étalonnage (24) comprenant un ou plusieurs émetteurs de lumière d'étalonnage (25) opérationnels pour émettre de la lumière d'étalonnage (24A), la source de lumière d'étalonnage (24) étant agencée pour diriger la lumière d'étalonnage (24A) pour illuminer une deuxième partie (22-2) du capteur de lumière (22) ; et
un processeur (26) connecté pour recevoir des données d'image (27) provenant du capteur de lumière (22) et pour traiter les données d'image (27) pour déterminer si la lumière incidente sur la première partie du capteur de lumière (22) présente une irradiance excessive par rapport à un seuil d'irradiance, sur la base d'une réponse du capteur de lumière (22) à la lumière d'étalonnage (24A) et de la fraction de la lumière provenant du champ lumineux.

2. Système de projection de lumière (10) selon la revendication 1, comprenant un étage de modulation (14) opérationnel pour moduler le champ lumineux provenant de la source de lumière (12) pour générer un champ lumineux modulé (15), dans lequel l'élément d'échantillonnage de lumière (21) échantillonne le champ lumineux modulé (15), ou dans lequel l'étage de modulation (14) comprend une unité d'orientation de lumière (14A) opérationnelle pour concentrer de la lumière provenant de la source de lumière (12) dans des régions présentant une irradiance supérieure à une irradiance d'une lumière incidente sur l'unité d'orientation de lumière (14A) provenant de la source de lumière (12).

3. Système de projection de lumière (10) selon l'une quelconque des revendications 1 ou 2, dans lequel la source de lumière (12) comprend une pluralité d'émetteurs de lumière (13), chacun étant opérationnel pour émettre de la lumière dans une bande correspondante parmi une première pluralité de bandes de longueur d'onde étroite, ou dans lequel la première pluralité de bandes de longueur d'onde étroite est constituée d'une première bande rouge (R), d'une première bande verte (G) et d'une première bande bleue (B).

4. Système de projection de lumière (10) selon l'une quelconque des revendications 1 à 3, dans lequel la source de lumière d'étalonnage (24) comprend une pluralité d'émetteurs de lumière (25) qui émettent chacun de la lumière dans une bande correspondante parmi une deuxième pluralité de bandes de longueur d'onde, ou
dans lequel la source de lumière d'étalonnage (24) comprend un ou plusieurs émetteurs de lumière à large bande ou une ou plusieurs diodes à émission de lumière (DEL), dans lequel les émetteurs de lumière à large bande comprennent des émetteurs de lumière blanche, ou
dans lequel la source de lumière d'étalonnage (24) comprend un ou plusieurs ensembles de référence d'émetteurs de lumière qui sont utilisés avec modération pour déterminer une compensation de vieillissement pour d'autres ensembles d'émetteurs de lumière de la source de lumière d'étalonnage (24), dans lequel la compensation de vieillissement comprend l'ajustement de courants d'attaque pour les autres ensembles d'émetteurs de lumière de la source de lumière d'étalonnage (24), de sorte que des sorties de lumière des autres ensembles d'émetteurs de lumière correspondent à des sorties de lumière d'ensembles de référence d'émetteurs de lumière correspondants parmi les ensembles de référence d'émetteurs de lumière.

5. Système de projection de lumière (10) selon l'une quelconque des revendications 1 à 4, dans lequel le capteur de lumière (22) comprend un capteur de lumière d'imagerie (22) opérationnel pour sortir les données d'image (27), ou un capteur de lumière RGB (22).

6. Système de projection de lumière (10) selon l'une quelconque des revendications 1 à 5, dans lequel la lumière projetée inclut des trames projetées à une fréquence de trame, et le capteur de lumière (22) mesure la lumière provenant du champ lumineux à une fréquence qui est au moins le double de la fréquence de trame, ou dans lequel le capteur de lumière (22) mesure la lumière provenant du champ lumineux à une fréquence qui est au moins une fois toutes les 5 millisecondes ou 3 millisecondes.

7. Système de projection de lumière (10) selon l'une quelconque des revendications 1 à 6, dans lequel le système de projection de lumière (10) est configuré pour appliquer une transformée de couleur aux données d'image (27) pour générer des données d'image transformées dans lesquelles une diaphonie entre des canaux de couleur des données d'image est réduite.

8. Système de projection de lumière (10) selon la revendication 7, dans lequel des valeurs dans les données d'image transformées sont indicatives d'une irradiance, ou dans lequel la transformée de couleur peut être représentée comme une matrice 3×3, ou dans lequel le capteur de lumière (22) comprend un capteur RGB qui est une partie d'une caméra (23) couleur, la transformée de couleur est effectuée par la caméra (23) et le processeur (26) traite les données d'image transformées provenant de la caméra (23).

9. Système de projection de lumière (10) selon l'une quelconque des revendications 1 à 8, dans lequel le processeur (26) est configuré pour, en réponse à la détermination du fait que la lumière incidente sur la première partie (22-1) du capteur de lumière (22) présente une irradiance excessive par rapport au seuil d'irradiance, éteindre ou réduire la source de lumière (12) et/ou opérer un obturateur pour empêcher la lumière d'être projetée par l'optique de sortie (16).

10. Système de projection de lumière (10) selon l'une quelconque des revendications 1 à 9, comprenant en outre un système de détection d'intrusion, opérationnel pour détecter l'intrusion de personnes ou d'objets dans une région qui inclut un faisceau de lumière projeté par une optique de projection (16), dans lequel le processeur (26) est configuré pour, en réponse à la détermination du fait que la lumière incidente sur la première partie (22-1) du capteur de lumière (22) présente une irradiance excessive par rapport au seuil d'irradiance et à la réception d'une entrée provenant du système de détection d'intrusion indiquant une intrusion, éteindre ou réduire la source de lumière (12) et/ou opérer un obturateur pour empêcher la lumière d'être projetée par l'optique de sortie (16), ou
dans lequel le système de détection d'intrusion inclut un télémètre opérationnel pour déterminer si des personnes ou des objets détectés sont plus proches qu'une distance seuil de l'optique de projection (16), dans lequel le processeur (26) est configuré pour, en réponse à la détermination du fait que la lumière incidente sur la première partie (22-1) du capteur de lumière (22) présente une irradiance excessive par rapport au seuil d'irradiance et à la réception d'une entrée provenant du système de détection d'intrusion indiquant une intrusion d'une personne ou d'un objet qui est plus proche de l'optique de projection (16) que la distance seuil, éteindre ou réduire la source de lumière (12) et/ou opérer un obturateur pour empêcher la lumière d'être projetée par l'optique de projection (16).

11. Système de projection de lumière (10) selon l'une quelconque des revendications 1 à 10, dans lequel la source de lumière (12) comprend une pluralité d'émetteurs de lumière laser (13), ou dans lequel les émetteurs de lumière laser (13) émettent chacun de la lumière présentant une largeur de bande de 15 nm ou moins.

12. Système de projection de lumière (10) selon l'une quelconque des revendications 1 à 11, dans lequel l'élément d'échantillonnage de lumière (21) comprend un séparateur de faisceau, ou l'élément d'échantillonnage de lumière (21) redirige moins de 5 % de la lumière provenant du champ lumineux sur le capteur de lumière.

13. Système de projection de lumière (10) selon l'une quelconque des revendications 1 à 12, dans lequel l'optique de sortie (16) comprend un objectif à focale variable qui est ajustable pour fournir différents rapports de projection, le moniteur d'irradiance (20) configuré pour recevoir une entrée identifiant un réglage de zoom de l'objectif à focale variable.

14. Système de projection de lumière (10) selon la revendication 13, dans lequel l'entrée identifiant le réglage de zoom est fournie en provenance de plusieurs capteurs de position de zoom redondants, ou dans lequel, en réponse à des changements du réglage de zoom, le moniteur d'irradiance (20) :
ajuste un niveau d'activation du moniteur d'irradiance (20) pour compenser des différences du réglage de zoom ;
si le réglage de zoom actuel est supérieur à un seuil, inhibe l'opération de la source de lumière (12) opérationnelle pour émettre le champ lumineux et/ou opère la source de lumière (12) à un réglage de puissance plus bas et/ou introduit un atténuateur optique dans un trajet de lumière du système de projection de lumière (10) et/ou désactive l'orientation de lumière et/ou contrôle l'orientation de lumière pour au moins partiellement amoindrir de la lumière provenant du champ lumineux et/ou envoie un signal d'avertissement ; et/ou
change le réglage de zoom de l'optique de sortie (16).

15. Procédé d'étalonnage pour le système de projection de lumière selon la revendication 1, le procédé comprenant :
le développement d'une transformée de couleur pour la source de lumière (12) et/ou la source de lumière d'étalonnage (24) sur la base au moins en partie des données d'image (27) ; et
la détermination au moins partielle d'une diaphonie résiduelle et/ou la mise à l'échelle vers des niveaux d'irradiance absolus.
